(19) Europäisches Patentamt European Patent Office Office européen des brevets

(11) **EP 3 073 675 B1**

(12) **EUROPEAN PATENT SPECIFICATION**

(45) Date of publication and mention
of the grant of the patent:
**17.10.2018 Bulletin 2018/42**

(21) Application number: **14797368.9**

(22) Date of filing: **16.06.2014**

(51) Int Cl.:
***H04L 12/24*** *(2006.01)*

(86) International application number:
**PCT/CN2014/080012**

(87) International publication number:
**WO 2014/183728 (20.11.2014 Gazette 2014/47)**

(54) **PERFORMANCE DATA MANAGEMENT METHOD AND DEVICE**

VERFAHREN UND VORRICHTUNG ZUR VERWALTUNG VON LEISTUNGSDATEN

PROCÉDÉ ET DISPOSITIF DE GESTION DE DONNÉES DE PERFORMANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2013 CN 201310578095**

(43) Date of publication of application:
**28.09.2016 Bulletin 2016/39**

(73) Proprietor: **ZTE Corporation
Shenzhen, Guangdong 518057 (CN)**

(72) Inventor: **DU, Xianjun
Shenzhen,
Guangdong 518057 (CN)**

(74) Representative: **Regimbeau
20, rue de Chazelles
75847 Paris Cedex 17 (FR)**

(56) References cited:
WO-A2-2005/081635      CN-A- 101 593 214
CN-A- 102 075 368      CN-A- 102 479 200
US-A- 5 696 697      US-B1- 7 606 895

**Description**

**Technical Field**

The present disclosure relates to the field of telecommunication Operation Supports System (OSS) management technologies, and in particular, to a performance data management method and a performance data management device.

**Technical Background**

Performance data is statistical information generated by a network unit, a network device and a network terminal during an operation process. By collecting, storing, computing, analyzing and exhibiting the performance data, the efficiency of the network and the network unit may be evaluated, the state of the network device may be monitored, and the network layout and the network analysis may be supported.

Due to various reasons, such as historical factors and commercial strategies, etc., the operators employ network devices from a plurality of vendors, and also, the network devices are also replaced and upgraded in different steps and stages. As a result, network devices with different versions from different vendors are present in the whole network at the same time. Because no intact and uniform performance data standard has been formed in the field of telecommunication OSS, difference is present between the performance data generated by these devices with different versions from different vendors, for example, the external forms may be different but the service meanings are the same; or, the external forms are the same but the service meanings are different. Therefore, it is difficult to effectively organize and manage these data so as to meet flexible service demands.

The current solution is mainly to predefine a generic performance object, to adapt and load the performance data with the same service meaning which have different versions and come from different vendors into a data sheet, so that different vendors and versions can be distinguished using attribute keywords. However, this solution has the following four shortages:

1) It needs to know the universal set of generic performance objects in advance, but nowadays no intact and uniform standard has been formed so that the universal set of generic performance objects cannot be known, and usually, generic performance objects are gradually found and added during the implementation of a project, and hence it is very difficult to predefine generic performance objects, and later maintenance is also very difficult;

2) For network devices with different versions from different vendors, the performance data thereof, for example, performance data generation cycle, data volume and data delay, etc., may be different, and the management and maintenance of the performance data will be very complex when all performance data are stored in a data sheet;

3) The same network devices with different versions from different vendors may have the same performance data or may have specific performance data of their own, so that the design and maintenance of the data sheet will be very complex when all performance data are stored in a data sheet; and

4) The data volume of the performance data is usually very large, so that the data volume of the data sheet will be too large when the performance data with different versions from different vendors are loaded into one data sheet, which causes the data sheet difficult to be used and maintained, especially in the case that it needs to view and analyze the performance data according to the vendors and the versions, and in this case, the system performance will become a serious bottleneck.

Therefore, it is meaningful to gradually analyze and generate the generic performance objects and further effectively organize and manage the performance data with different versions from different vendors during the implementation of a project, without knowing the generic performance objects in advance, so as to enable an OSS system to support flexible and variable service demands.

US 7606895B1 discloses a method of managing performance data and accounting data that are generated in a computer network, which comprises collecting performance data from the network using one or more collector blades that are installed into a data collection manager at a time when the data collection manager is executed; determining whether the performance data satisfies one or more thresholding rules, and if so, generating and sending one or more performance messages; filtering the performance data using one or more filters; aggregating the performance data; and correlating the performance data with other data received from one or more network management subsystems.

US 5696697A1 discloses a network element in a telecommunication network providing a number of different types of services, which supports several telecommunication network applications (1304, 1306). It furthermore contains system resources and management information software. This software includes application specific management information and management information for system resources common to the applications, and is available to an operations system for managing the system resources when they are to be used. All of said management information is organized, from the point of view of naming, in several application specific management information bases each in the form of a respective hierarchical tree structure (1310, 1312).

## Summary

In order to solve the existing technical problem, the embodiments of the disclosure mainly provide a performance data management method according to independent claim 1 and a performance data management device according to independent claim 13. Further improvements and embodiments are provided in the dependent claims.

The technical solutions of the embodiments of the disclosure are realized as follows.

An embodiment of the disclosure provides a performance data management method, which includes: establishing, by an upper-level network management system, a performance data dimension, and establishing and installing a performance data service packet according to the performance data dimension; parsing the service packet to obtain an instance of the performance data dimension, and adding the instance of the performance data dimension into a system model; converting the instance of the performance data dimension in the system model into a multiple-version generic performance object and a multiple-vendor generic performance object according to a performance object conversion rule, and outputting a data view.

An embodiment of the disclosure provides a performance data management device, which includes: a performance data service packet generating module, a performance data preliminary processing module and a generic performance object generating module; wherein:

the performance data service packet generating module is configured for establishing a performance data dimension and establishing a performance data service packet according to the performance data dimension;

the performance data preliminary processing module is configured for installing the performance data service packet generated in a system model, parsing the service packet to obtain an instance of the performance data dimension, and adding the instance of the performance data dimension obtained into the system model; and

the generic performance object generating module is configured for converting the instance of the performance data dimension in the system model into a multiple-version generic performance object and a multiple-vendor generic performance object according to a performance object conversion rule, and outputting a data view.

The embodiments of the disclosure provide a performance data management method and a performance data management device, and the method includes: establishing, by an upper-level network management system, a performance data dimension, and establishing and installing a performance data service packet according to the performance data dimension; parsing the service packet to obtain an instance of the performance data dimension, and adding the instance of the performance data dimension into a system model; converting the instance of the performance data dimension in the system model into a multiple-version generic performance object and a multiple-vendor generic performance object according to a performance object conversion rule, and outputting a data view. Thus, the difficulty in performance data management and maintenance can be reduced greatly, and also, because in the solution of the disclosure, data with different versions from different vendors are logically stored separately and the processing logic is relatively simple, the flexibility and maintainability of the system may be enhanced. In terms of the usage mode of model and data, the model and data related to vendor and version are same with the model and data unrelated to vendor and version. Therefore, the data may be accessed via consistent interface and logic, and the data with different versions from different vendors may be viewed and analyzed separately or may be viewed and analyzed uniformly, so that a flexible and convenient manner is provided.

## Description of Drawings

Fig. 1 is a schematic flow chart of a performance data management method according to an embodiment of the disclosure;

Fig. 2 is a schematic diagram showing the relation between a specific resource type and a generic resource type according to an embodiment of the disclosure;

Fig. 3 is a schematic diagram showing the relation between a specific performance object and a generic performance object from a number of vendors and a generic performance object with a number of versions according to an embodiment of the disclosure; and

Fig. 4 is a structural block diagram of a performance data management device according to an embodiment of the disclosure.

**Detailed description of the Embodiment**

The disclosure will be further illustrated in detail below in conjunction with the drawings and specific embodiments.

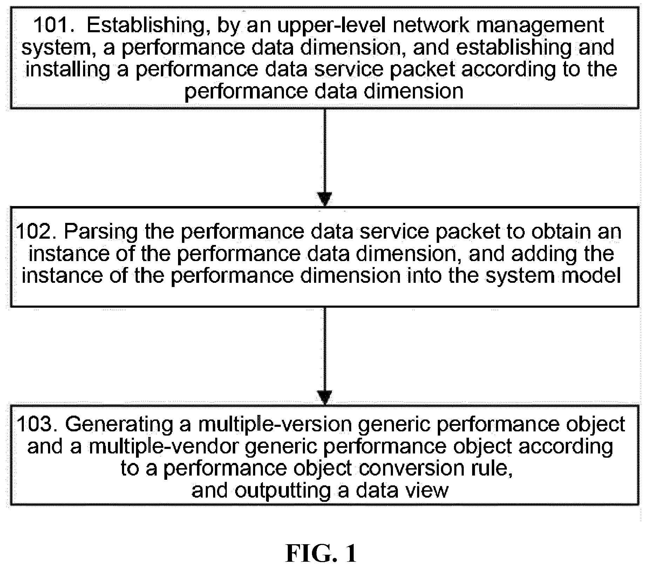

An embodiment of the disclosure realizes a performance data management method, as shown in Fig. 1, which mainly includes the following steps.

Step 101: establishing, by an upper-level network management system, a performance data dimension, and establishing and installing a performance data service packet according to the performance data dimension.

During performance data analysis, the performance data needs to be analyzed from various different dimensions. For example, for Serving GPRS Support Node (SGSN) in the communication field, the dimension interested by an operator may be one of dimensions such as routing area, location area, service area, tracking area, access point, access mode, service type, user type and terminal type or a combination thereof.

In the embodiment of the disclosure, a performance data dimension is established firstly. Specifically, the performance data dimension to be established includes: resource type dimension, performance object dimension and performance index dimension. Once the dimension parameter values for these performance data dimensions are determined, the resource type, the performance object or the performance index corresponding to the dimensions may be determined.

The resource type dimension, the performance object dimension and the performance index dimension in the embodiment of the disclosure are specifically defined in detail below.

1) The resource type dimension is configured for uniquely marking and locating the resource type, and it includes a specific resource type dimension $\vec{d}_{res\text{-}type}$ and a generic resource type dimension $\vec{d}_{c\text{-}res\text{-}type}$.

The generic resource type represents a device type that has been recognized and standardized in the industry, for example, CELL, Base Transceiver Station (BTS) and Base Station Controller (BSC), etc. Generally, these device types can be supported by each vendor. The generic resource type is a high-level abstract, with no vendors or versions being distinguished;

The specific resource type is an abstract of a data resource of specific vendor and device type. The specific resource type may or may not include the generic resource type. A specific resource type that does not include the generic resource type will be a resource type specific to a certain vendor, so that it does not need to distinguish between multiple vendors or multiple versions.

The specific resource type dimension may be defined as:

$$\vec{d}_{res\text{-}type} = (\text{Private Network, Vendor, Resource Type Name})^{T}$$

The generic resource type dimension may be defined as:

$$\vec{d}_{c\text{-}res\text{-}type} = (\text{Private Network, 0, Resource Type Name})^{T}$$

2) The performance object is a service packet of the performance index. A performance object dimension, which is defined as $\vec{d}_{po}$, is configured for uniquely identifying and locating a performance object. The performance object dimension may be divided into a specific performance object dimension, a multiple-version generic performance object dimension, and a multiple-vendor generic performance object dimension, and the specific performance object dimension $\vec{d}_{po}$ may be defined as:

$$\vec{d}_{po} = \text{(Private Network, Vendor, Resource Type, Version, Performance Object Name, Grain Size)}^T$$

In version-unrelated cases, i.e., multiple-version generic performance object dimension $\vec{d}_{po\text{-}multi\text{-}version}$ is defined as follows:

$$\vec{d}_{po-multi-version} = \text{(Private Network, Vendor, Resource Type, 0, Performance Object Name, Grain Size)}^T$$

In vendor-unrelated cases, i.e., multiple-vendor generic performance object dimension $\vec{d}_{po\text{-}multi\text{-}vendor}$ is defined as follows:

$$\vec{d}_{po-multi-vendor} = \text{(Private Network, 0, Resource Type, 0, Performance Object Name, Grain Size)}^T$$

The resource type in the performance object dimension defined here is just the resource type corresponding to the resource type dimension defined above.

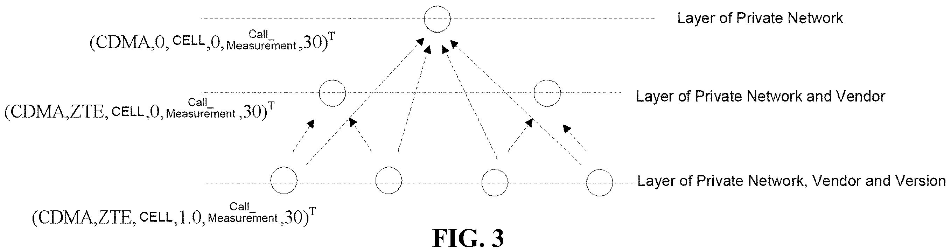

Fig. 3 shows the relation between the performance objects identified respectively by multiple-vendor generic performance object dimension, multiple-version generic performance object dimension and specific performance object dimension. Here, the private network is defined as CDMA, the vendor is defined as ZTE, the resource type is defined as CELL, the version is defined as 1.0, the performance object name is defined as Call_Measurement, and the grain size is defined as 30, where, $(CDMA, ZTE, CELL, 1.0, Call\_Measurement, 30)^T$ is the specific performance object, which is located on a layer of private network, vendor and version, $(CDMA, ZTE, CELL, 0, Call\_Measurement, 30)^T$ is the multiple-version generic performance object, which is located on a layer of private network and vendor, and $(CDMA, 0, CELL, 0, Call Measurement, 30)^T$ is the multiple-vendor generic performance object, which is located on a layer of private network.

It should be noted that, in the case of multiple vendors, no version issue needs to be considered. Therefore, the expression of the multiple-vendor generic performance object here is the same as that in the case of multiple vendors and multiple versions, and in the subsequent description, the case of multiple vendors and multiple versions will no longer be considered, and the case of multiple vendors and the case of multiple vendors and multiple versions will be integrated as the case of multiple vendors.

3) The performance index dimension is configured for uniquely identifying and locating the performance index, and the performance index dimension may divided into a specific performance index dimension, a multiple-version performance index dimension and a multiple-vendor performance index dimension, and the specific performance index dimension $\vec{d}_{pi}$ may be defined as:

$$\vec{d}_{pi} = \text{(Private Network, Vendor, Resource Type, Version, Performance Object Name, Grain Size, Performance Index Name)}^T$$

In version-unrelated cases, i.e., the multiple-version performance index dimension $\vec{d}_{pi\text{-}multi\text{-}version}$ is defined as follows:

$$\vec{d}_{pi-multi-version} = \text{(Private Network, Vendor, Resource Type, 0, Performance Object Name, Grain Size, Performance Index Name)}^T$$

In vendor-unrelated cases, i.e., the multiple-vendor performance index dimension $\vec{d}_{pi\text{-}multi\text{-}vendor}$ is defined as follows:

$$\vec{d}_{pi-multi-vendor} = (\text{Private Network, 0, Resource Type, 0, Performance Object Name, Grain Size,}$$

$$\text{Performance Index Name})^{T}$$

In this step, the establishing and installing a performance data service packet according to the performance data dimension includes: acquiring the performance data information for determining all resource types, all performance objects and all performance indexes; and establishing and installing a performance data service packet based on the performance data information.

Specifically, the performance data information for determining all resource types, all performance objects and all performance indexes may be uploaded by a lower-level network management system to an upper-level network management system via a northbound interface. The upper-level network management system is connected with all lower-level network management systems in the system, and each lower-level network management system collects and manages the performance data with respect to a single vendor and version; thus, the upper-level network management system may not only acquire all performance data information managed by all lower-level network management systems connected therewith, but also acquire all performance data.

In the disclosure, the performance data information that needs to be acquired specifically includes: private network, vendor, resource type, version and grain size, etc., that is, all parameters established above in the performance data dimension for determining the resource type, performance object or performance index;

Next, it needs to establish and install a performance data service packet based on the performance data information. Specifically, a plurality of performance data service packets may be provided, where each performance data service packet includes a plurality of performance objects which all belong to the same generic resource type; in other words, the number of performance data service packets established will be the same as the number of the generic resource types managed.

The establishing and installing a performance data service packet based on the performance data information includes: establishing an instance of the performance data dimension according to the performance data information, and compressing the established instance of the performance data dimension into a performance data service packet.

The establishing an instance of the performance data dimension according to the performance data information includes the steps from Steps 101 to 103.

Step 1: establishing a generic resource type instance according to $\vec{d}_{c\text{-}res\text{-}type}$, where, the generic resource type instance is stored in a generic resource type data sheet, and all generic resource types managed by the lower-level network management system connected with the upper-level network management system are recorded in the generic resource type data sheet.

Step 2: establishing a specific resource type instance according to $\vec{d}_{res\text{-}type}$, where, the specific resource type instance is stored in a specific resource type data sheet, all specific resource types managed by the lower-level network management system connected with the upper-level network management system are recorded in the specific resource type data sheet, each specific resource type data sheet is mapped to a corresponding generic resource type data sheet, and the corresponding generic resource type data sheet is a generic resource type data sheet in which the generic resource type instance to which the specific resource type instance belongs is stored.

Step 3: establishing a performance object instance according to $\vec{d}_{po}$, where, the performance object instance is stored in a performance object data sheet, all performance objects managed by the lower-level network management system connected with the upper-level network management system are recorded in the performance object data sheet, each performance object data sheet is mapped to a corresponding specific resource type data sheet, and the corresponding specific resource type data sheet is a specific resource type data sheet in which the specific resource type instance to which the performance object instance belongs is stored;

Specifically, the performance index is the minimum grain size of the performance data and is the basis of all performance data, the performance object is a service packet of the performance index, and a network device generally stores the performance indexes according to service packets (that is, in the form of performance object), so that two constraints is present when a performance object instance is established: in the first constraint, for performance objects with the same service meaning, the names thereof should be defined as the same with each with, and for performance indexes with the same service meaning, the names thereof should also be defined as the same with each other; and in the second constraint, for performance objects and performance indexes with the same name but different service meanings, the performance objects and the performance indexes should be renamed to eliminate the ambiguity, which is an important premise for automatically identifying and generating a multiple-vendor generic performance object or a multiple-version generic performance object in the subsequent processing.

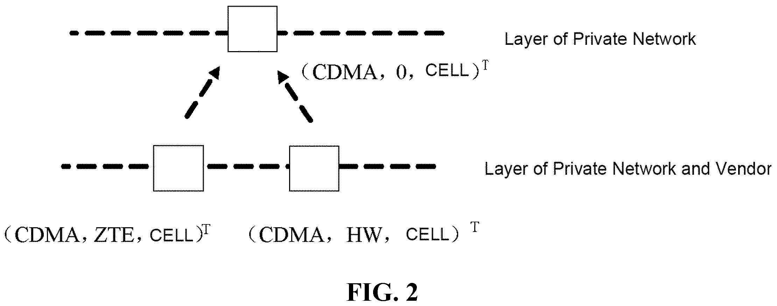

An instance of the performance data dimension is established, that is, the performance data dimension is instantiated. For example, assuming that the private network to which the system belongs is CDMA and the generic resource types in the system include CELL, BTS and BSC, then three generic resource types will be instantiated, which are respectively: $(CDMA, 0, CELL)^T$, $(CDMA, 0, BTS)^T$ and $(CDMA, 0, BSC)^T$. For the generic resource type $(CDMA, 0, CELL)^T$, assuming that currently two vendors i.e., ZTE and HW meet such a generic resource type in the system, then two specific resource types will be instantiated, i.e., $(CDMA, ZTE, CELL)^T$ and $(CDMA, HW\ CELL)^T$. Fig. 2 shows the relation between the specific resource types $(CDMA, ZTE, CELL)^T$, $(CDMA, HW\ CELL)^T$ instantiated here and the generic resource type $(CDMA, 0, CELL)^T$, where, $(CDMA, ZTE, CELL)^T$ and $(CDMA, HW\ CELL)^T$ are located on a layer of private network and vendor, and $(CDMA, 0, CELL)^T$ is a generic resource type and located on a layer of private network.

More preferably, for each specific resource type, various performance objects may also be instantiated according to different versions.

Next, the instance of the performance data dimension established above is packaged into a performance data service packet; and the performance data service packet is stored in a system model of the upper-level network management system.

Step 102: parsing the performance data service packet, obtaining an instance of the performance data dimension, and adding the instance of the performance data dimension into the system model.

Specifically, after the performance data service packet is successfully installed in Step 101, the system automatically parses the performance data service packet and stores the obtained instance of the performance data dimension in the system model.

In practical operation, the system model is stored in a data base and is in the form of a data sheet, and the system model is established and improved during the continuous installing of performance data service packets and the continuous storing of instances of performance data dimensions.

In this step, the storing the obtained instance of the performance data dimension in the system model specifically includes: writing a generic resource type instance, a specific resource type instance and a performance object instance respectively into a data sheet for storing the system model.

Step 103: converting the instance of the performance data dimension in the system model into a multiple-version generic performance object and a multiple-vendor generic performance object according to a performance object conversion rule, and creating a data view.

Here, the predefined rule includes:

1) $x = f(\vec{d}_x), \vec{d}_x = f^{-1}(x)$, $x \in$ {Resource Type, Performance Object, Performance Index};

In this expression, $\vec{d}_x$ may be used to represent the resource type dimension, performance object dimension or performance index dimension defined in Step 101, and correspondingly, $\vec{d}_x$ is taken as an independent variable of the function, and the expected result x obtained by function $f()$ will represents the resource type, performance object or performance index; the dimension expression $\vec{d}_x$ of x may be obtained by the inverse function of $f()$.

2) Conversion rule for performance data dimension

2.1) Conversion rule from specific resource type dimension to generic resource type dimension:

$$r_1(\vec{d}_{res-type}): \vec{d}_{c-res-type} = [\vec{i}, \vec{o}, \vec{i}] \times \vec{d}_{res-type}$$

In this expression, $r_1()$ represents a function for realizing the conversion from the specific resource type dimension $\vec{d}_{res-type}$ to the generic resource type dimension $\vec{d}_{c-res-type}$, $\vec{i} = (0, ..., 1, 0, ..., 0)^T$ is unit vector, and $\vec{0} = [0, 0, ... 0, ... 0]^T$ is zero vector;

2.2) Conversion rule from specific performance object dimension to multiple-version generic performance object dimension:

$$r_2(\vec{d}_{po}): \vec{d}_{po-multi-version} = [\vec{i}, \vec{i}, \vec{i}, \vec{0}, \vec{i}, \vec{i}]^T \times \vec{d}_{po}$$

In this expression, $r_2()$ represents a function for realizing the conversion from the specific performance object

dimension $\vec{d}_{po}$ to the multiple-version generic performance object dimension $\vec{d}_{po\text{-}multi\text{-}version}$, $\vec{i} = (0, ..., 1, 0, ... , 0)^T$ is unit vector, and $\vec{0} = [0, 0, ... 0, ... 0]^T$ is zero vector;

2.3) Conversion rule from specific performance object dimension to multiple-vendor generic performance object dimension:

$$r_3(\vec{d}_{po}):\vec{d}_{po\text{-}multi\text{-}vendor} = [\vec{i}, \vec{0}, \vec{i}, \vec{0}, \vec{i}, \vec{i}]^T \times \vec{d}_{po}$$

In this expression, $r_3()$ represents a function for realizing the conversion from the specific performance object dimension $\vec{d}_{po}$ to the multiple-vendor generic performance object dimension $\vec{d}_{po\text{-}multi\text{-}vender}$, $\vec{i} = (0, ..., 1, 0, ..., 0)^T$ is unit vector, and $\vec{0} = [0, 0,... 0,..., 0]^T$ is zero vector;

2.4) Conversion rule from specific performance index dimension to multiple-version performance index dimension:

$$r_4(\vec{d}_{pi}):\vec{d}_{pi\text{-}multi\text{-}version} = [\vec{i}, \vec{i}, \vec{i}, \vec{0}, \vec{i}, \vec{i}, \vec{i}]^T \times \vec{d}_{pi}$$

In this expression, $r_4()$ represents a function for realizing the conversion from the specific performance index dimension $\vec{d}_{pi}$ to the multiple-version generic performance index dimension $\vec{d}_{pi\text{-}multi\text{-}version}$, $\vec{i} = (0, ..., 1, 0, ... , 0)^T$ is unit vector, and $\vec{0} = [0, 0,... 0, ... 0]^T$ is zero vector;

2.5) Conversion rule from specific performance index dimension to multiple-vendor performance index dimension:

$$r_5(\vec{d}_{pi}):\vec{d}_{pi\text{-}multi\text{-}vendor} = [\vec{i}, \vec{0}, \vec{i}, \vec{0}, \vec{i}, \vec{i}, \vec{i}]^T \times \vec{d}_{pi}$$

In this expression, $r_5()$ represents a function for realizing the conversion from the specific performance index dimension $\vec{d}_{pi}$ to the multiple-vendor generic performance index dimension $\vec{d}_{pi\text{-}multi\text{-}vendor}$, $\vec{i} = (0, ..., 1, 0, ..., 0)^T$ is unit vector, and $\vec{o} = (0, 0, ... 0, ... 0)^T$ is zero vector.

In Step 102, after the performance data service packet is parsed and the obtained instance of the performance data dimension is added into the system model, in this step, the instance of the performance data dimension in the system model may be converted into a multiple-version or multiple-vendor generic performance object according to the rules defined in the above 2.1 to 2.5; specifically, the premise for generating a multiple-vendor generic performance object or a multiple-version generic performance object lies in that the generic resource types corresponding to the instances of the performance data dimension in the system model must be same with each other.

The specific implementation in which the instance of the performance data dimension in the system model is converted into a multiple-version generic performance object and a data view is created will be described below, and mainly includes the steps of:

Step 1: determining a set *poGroup* of performance objects having the same private network, the same vendor, different versions, the same name and the same grain size when a performance object $po_i$ is newly added to the system model, wherein the performance object set already installed in the system model is $P = \{po_1, po_j,......po_m,......po_l\}$, and the *poGroup* is determined by set element $po_j$:

$$poGroup = \{po_j \mid f^{-1}(po_j) \neq r_2(f^{-1}(po_i)) \wedge r_2(f^{-1}(po_j)) = r_2(f^{-1}(po_i)), po_j \in P\}$$

Step 2: determining a set $PI_j$ of performance indexes that belong to the performance object set *poGroup*, wherein $PI_j$ is determined by set element $pi_l$:

$$PI_j = \{pi_l \mid pi_l \in po_j, po_j \in poGroup\}$$

where, $j \in [1, poGroup.size]$, and $poGroup.size$ represents the size of $poGroup$;

Step 3: determining a set $\vec{d}_{pi\text{-}multi\text{-}version}Group$ of performance index dimensions that belong to $PI_j$ and are multiple versions:

$$\vec{d}_{pi\text{-}multi\text{-}version}Group = \bigcap\nolimits_{j=1}^{poGroup.size} \{r_4(f^{-1}(pi_j)), pi_j \in PI_j\}$$

Step 4: determining a set $PI'_j$ of performance indexes that belong to $\vec{d}_{pi\text{-}multi\text{-}version}Group$ and have the same name, where $PI'_j$ is determined by set element $pi_m$, and except for version information, other dimension information of the set elements that belong to $PI'_j$ are same as the defined dimension of P:

$$PI'_j = \{pi_m \mid r_4(f^{-1}(pi_m)) \in \vec{d}_{pi\text{-}multi\text{-}version}Group, pi_m \in PI_j\}$$

Step 5: creating multiple-version generic performance object and index:

At $\vec{d}_{po\text{-}multi\text{-}version} = r_2(f^{-1}(po_i))$, a multiple-version generic performance object $po_{multi\text{-}version}$ is created by taking $po_i$ as a template;
At $\{\vec{d}_{pi\text{-}multi\text{-}version} \mid \vec{d}_{pi\text{-}multi\text{-}version} \in \vec{d}_{pi\text{-}multi\text{-}version}Group\}$, a multiple-version generic performance index is created by taking $\{pi_x \mid r_4(f^{-1}(pi_x)) = \vec{d}_{pi\text{-}multi\text{-}version} \in \vec{d}_{pi\text{-}multi\text{-}version}Group\}$ as a template;

Step 6: outputting a data view:
A data view v is output on the basis of $\{tableName(po_j), \{columnName(pi_x) \mid pi_x \in PI'_j\} \mid j \in [1, poGroup.size]\}$, and v is taken as a data sheet of $po_{multi\text{-}version}$, where $tableName(po_j)$ is the name of the data sheet including performance object $po_j$, and $columnName(pi_x)$ is the column name of $pi_x$.

In this step, the instance of the performance data dimension in the system model may also be converted into a multiple-vendor generic performance object.
The specific implementation in which the instance of the performance data dimension in the system model is converted into a multiple-vendor generic performance object and a data view is created will be described below, and it mainly includes the steps of:

Step 1: determining a set $poGroup$ of performance objects having the same private network, different vendors, different versions, the same name and the same grain size when a performance object $po_i$ is newly added to the system model, wherein the performance object set already installed in the system model is $P = \{po_1, po_j......po_m,......po_l\}$, and the $poGroup$ is determined by set element $po_j$:

$$poGroup = \{po_j \mid f^{-1}(po_j) \neq r_3(f^{-1}(po_i)) \wedge r_3(f^{-1}(po_j)) = r_3(f^{-1}(po_i)), po_j \in P\}$$

Step 2: determining a set $PI_j$ of performance indexes that belong to the performance object set $poGroup$, wherein $PI_j$ is determined by set element $pi_i$:

$$PI_j = \{pi_i \mid pi_i \in po_j, po_j \in poGroup\}$$

wherein, $j \in [1, poGroup.size]$, and $poGroup.size$ represents the size of $poGroup$;
Step 3: determining a set $\vec{d}_{pi\text{-}multi\text{-}vendor}Group$ of performance index dimensions that belong to $PI_j$ and are of multiple-vendor:

$$\vec{d}_{pi\text{-}multi\text{-}vendor}Group = \bigcap\nolimits_{j=1}^{poGroup.size} \{r_5(f^{-1}(pi_j)), pi_j \in PI_j\}$$

Step 4: determining a set $PI'_j$ of performance indexes that belong to $\vec{d}_{pi\text{-}multi\text{-}vendor}Group$ and have the same name, wherein $PI'_j$ is determined by set element $pi_m$, and except for vendor and version information, other dimension information for the set elements that belong to $PI'_j$ are same as the dimension of P that is defined:

$$PI'_j = \{pi_m \mid r_5(f^{-1}(pi_m)) \in \vec{d}_{pi\text{-}multi\text{-}vender}Group, pi_m \in PI_j\}$$

Step 5: creating a multiple-vendor generic performance object and index:

at $\vec{d}_{po\text{-}multi\text{-}vendor} = r_3 f^{-1}(po_m))$, a multiple-vendor generic performance object $po_{multi\text{-}vendor}$ is created by taking $po_j$ as a template;

At $\{\vec{d}_{pi\text{-}multi\text{-}vendor} \mid \vec{d}_{pi\text{-}multi\text{-}vendor} \in \vec{d}_{pi\text{-}multi\text{-}vendor}Group\}$, a multiple-vendor performance index is created by taking $\{pi_x \mid r_5(f^{-1}(pi_x)) = \vec{d}_{pi\text{-}multi\text{-}vendor} \in \vec{d}_{pi\text{-}multi\text{-}vendor}Group\}$ as a template;

Step 6: outputting a data view: a data view v is output on the basis of $\{tableName(po_j), \{columnName(pi_x) \mid pi_x \in PI'_j\} \mid j \in [1, poGroup.size]\}$, and v is taken as a data sheet of $po_{multi\text{-}vendor}$, wherein $tableName(po_j)$ is the name of the data sheet where performance object $po_j$ exists, and $columnName(pi_x)$ is the column name of $pi_x$.

The specific implementation in which a multiple-version generic performance object is generated and a data view is output has been introduced above, and the technical solution of the disclosure will be further described in detail below by taking the implementation process of multiple-vendor, multiple-version performance data management in telecommunication OSS domain as an example, in conjunction with the drawings.

1) Establishing a generic resource type instance according to "private network":

An instance of generic resource type dimension under private network CDMA is defined as $(CDMA, 0, CELL)^T$;

2) Establishing a specific resource type instance according to "private network, vendor":

Specifically, two instances of specific resource type under private network CDMA are defined as $(CDMA, ZTE, CELL)^T$ and $(CDMA, HW, CELL)^T$;

3) defining a performance object instance according to "private network, vendor and version":

Four instances of performance object are defined (for easy description, the performance index and the performance object are put together, and the attributes of the performance index, such as column name, etc., are omitted), the generic resource types to which the four performance object instances belong are all the generic resource types defined in 1), and the specific resource types are not totally the same; in other words, the vendor dimensions in the specific resource type dimensions of the four performance object instances are not totally the same, where, the vendor in two performance object instances is ZTE, and the vendor in the other two performance object instances is HW, but the performance data models with the same vendor have different versions;

Then, the specific parameters of the four performance object instances are as shown in the sheets below:

(1) Performance object instance 1: $(CDMA, ZTE, CELL, 1.0, Call\_Measurement, 30)^T$

The specific parameters of performance object instance 1 are as shown in Sheet 1:

Sheet 1

| Name | Call_Measurement |
|---|---|
| Private Network | CDMA |
| Vendor | ZTE |
| Resource Type | CELL |
| Version | 1.0 |
| Grain Size | 30min |

(continued)

| Name | Call_Measurement |
|---|---|
| Data Sheet Name | TD_ZTE_CDMA_CALL_MEASUREMENT_30_1_0 |
| Performance Index | Call_Count |
| | Call_Succ_Count |
| | Call_fail_Count |

(2) Performance object instance 2: (CDMA, ZTE, CELL, 2.0, Call_Measurement, 30)$^T$

The specific parameters of performance object instance 2 are as shown in Sheet 2:

Sheet 2

| Name | Call_Measurement |
|---|---|
| Private Network | CDMA |
| Vendor | ZTE |
| Resource Type | CELL |
| Version | 2.0 |
| Grain Size | 30min |
| Data Sheet Name | TD_ZTE_CDMA_CALL_MEASUREMENT_30_2_0 |
| Performance Index | Call_Count |
| | Call_Succ_Count |
| | Call_Avg_Seconds |

(3) Performance object instance 3: (CDMA, HW, CELL, 2.0, Call_Measurement, 30)$^T$

The specific parameters of performance object instance 3 are as shown in Sheet 3:

Sheet 3

| Name | Call_Measurement |
|---|---|
| Private Network | CDMA |
| Vendor | HW |
| Resource Type | CELL |
| Version | 2.0 |
| Grain Size | 30min |
| Data Sheet Name | TD_HW_CDMA_CALL_MEASUREMENT_30_2_0 |
| Performance Index | Call_Count |
| | Call_Succ_Count |

(4) Performance object instance 4: (CDMA, HW, CELL, 3.0, Call_Measurement, 30)$^T$

The specific parameters of performance object instance 4 are as shown in Sheet 4:

Sheet 4

| Name | Call_Measurement |
|---|---|
| Private Network | CDMA |
| Vendor | HW |
| Resource Type | CELL |
| Version | 3.0 |
| Grain Size | 30min |
| Data Sheet Name | TD_HW_CDMA_CALL_MEASUREMENT_30_3_0 |
| Performance Index | Call_Count |
| | Call_Succ_Count |
| | Call_Max_Seconds |

In each performance object parameter sheet, Data Sheet Name is the name of the data sheet corresponding to the performance object; and in each performance object parameter sheet, Performance Index represents all performance indexes that belong to the performance object;

4) Manufacturing a performance data service packet:

Four performance data service packets are established according to "private network, vendor, version", which respectively contains the four performance object instances in 3). The four performance data service packets are respectively named as: cdma-zte-1.0.pkg, cdma-zte-2.0.pkg, cdma-hw-2.0.pkg and cdma-hw-3.0.pkg;

5) Installing a performance data model by the performance data service packets:

The four performance data service packets are installed respectively, and after the four performance data service packets are installed successfully, the performance object instances in the service packets are parsed and added into the system model;

6) Automatically generating a multiple-vendor and multiple-version generic performance object according to a predefined rule, and creating a data view;

After the performance object instances are added into the system model, an upper-level network management system will automatically identify and generate a multiple-vendor and multiple-version generic performance object according to a performance object conversion rule, and finally the following three generic performance objects will be generated, and corresponding data views thereof will be output:

(1) Multiple-version generic performance object with a vendor dimension of ZTE: (*CDMA*, *ZTE*, *CELL*, 0, *Call_Measurement,* 30)$^T$

The parameter list thereof is as shown in Sheet 5:

Sheet 5

| Name | Call_Measurement |
|---|---|
| Private Network | CDMA |
| Vendor | ZTE |
| Resource Type | CELL |
| Version | 0 |
| Grain size | 30min |
| Data Sheet Name | VD_ZTE_CDMA_CALL_MEASUREMENT_30 |

(continued)

| Name | Call_Measurement |
|---|---|
|  | This is a data view, with a base sheet of: |
|  | TD_ZTE_CDMA_CALL_MEASUREMENT_30_1_0<br>TD_ZTE_CDMA_CALL_MEASUREMENT_30_2_0 |
| Performance Index | Call_Count |
|  | Call_Succ_Count |

(2) Multiple-version generic performance object with a vendor dimension of HW: ($CDMA$, $HW$, $CELL$, 0, $Call\_Measurement$, 30)$^T$

The parameter list thereof is as shown in Sheet 6:

Sheet 6

| Name | Call_Measurement |
|---|---|
| Private Network | CDMA |
| Vendor | HW |
| Resource Type | CELL |
| Version | 0 |
| Grain Size | 30min |
| Data Sheet Name | VD_HW_CDMA_CALL_MEASUREMENT_30<br>This is a data view, with a base sheet of:<br>TD_HW_CDMA_CALL_MEASUREMENT_30_2_0,<br>TD_HW_CDMA_CALL_MEASUREMENT_30_3_0 |
| Column Name | Call_Count |
|  | Call_Succ_Count |

(3) Vendor and version undistinguishing performance object: ($CDMA$, 0, $CELL$, 0, $Call\_Measurement$, 30)$^T$

The parameter list thereof is as shown in Sheet 7:

Sheet 7

| Name | Call_Measurement |
|---|---|
| Private Network | CDMA |
| Vendor | 0 |
| Resource Type | CELL |
| Version | 0 |
| Grain Size | 30min |
| Data Sheet Name | VD_CDMA_CALL_MEASUREMENT_30<br>This is a data view, with a base sheet of:<br>TD_ZTE_CDMA_CALL_MEASUREMENT_30_1_0<br>TD_ZTE_CDMA_CALL_MEASUREMENT_30_2_0<br>TD_HW_CDMA_CALL_MEASUREMENT_30_2_0<br>TD_HW_CDMA_CALL_MEASUREMENT_30_3_0 |

(continued)

| Name | Call_Measurement |
|---|---|
| Performance Index | Call_Count |
| | Call_Succ_Count |

It may be seen from the above process that, the data storage mode of the generic performance object generated by the solution of the disclosure is a data view, and the base sheet thereof is a data sheet by which a plurality of specific performance objects thereof are generate. For external application, it is consistent no matter for model, access interface or data usage mode.

Additionally, in the solution of the disclosure, the defined specific performance object, the multiple-vendor generic performance object and the multiple-version generic performance object have the same form, and the corresponding data sheets (data views) thereof also have the same form, so that a flexible multiple-vendor, multiple-version performance data access and management may be realized by dimension coordinates of the performance data model;

Preferably, according to the solution of the disclosure, all performance objects with different versions from different vendors managed by the upper-level network management system are generated, and the performance data are subsequently added into the system model, and hence different performance data are managed by independent performance objects, so that during data viewing or data analyzing, the vendors or the versions may be or may not be distinguished, thus improving the flexibility of data analyzing and data viewing; moreover, in the subsequent data processing, various performance data processing, such as time aggregation, resource aggregation, busy time computation and Key Performance Indicator (KPI) computation, etc., can be performed, by only mapping and loading the generic performance data to the corresponding performance data sheet via an Extract-Transform-Load (ETL, i.e., data extraction, transformation and load) rule.

For example, in the above specific embodiment, the mapping and loading the performance data to the corresponding performance data sheet according to an ETL rule specifically includes: mapping and loading ($CDMA$, $ZTE$, $CELL$, 1.0, $Call\_Measurement$, 30)$^T$ to the specific performance data sheet 1: TD_ZTE_CDMA_CALL_MEASUREMENT_30_1_0, and in practical application, the specific form of Sheet 1 is as shown in Sheet 8:

Sheet 8

| | RID | START_TIME | GRANULARITY | CALL_COUNT | CALL_SUCC_COUNT | CALL_FAIL_COUNT |
|---|---|---|---|---|---|---|
| 1 | 10000001 | 2013-7-17 18:00:00.0 | 30 | 20021 | 20020 | 1 |
| 2 | 10000002 | 2013-7-17 18:00:00.0 | 30 | 11201 | 11201 | 0 |

($CDMA$, $HW$, $CELL$, 2.0, $Call\_Measurement$, 30)$^T$ is mapped and loaded to the specific performance data sheet 2: TD_HW_CDMA_CALL_MEASUREMENT_30_2_0, and the like. In practical application, the specific form of Sheet 1 is as shown in Sheet 9:

Sheet 9

| | RID | START_TIME | GRANULARITY | CALL_COUNT | CALL_SUCC_COUNT |
|---|---|---|---|---|---|
| 1 | 30000001 | 2013-7-17 18:00:00.0 | 30 | 1001 | 1001 |
| 2 | 30000002 | 2013-7-17 18:00:00.0 | 30 | 1112 | 1112 |
| 3 | 30000003 | 2013-7-17 18:00:00.0 | 30 | 100 | 100 |

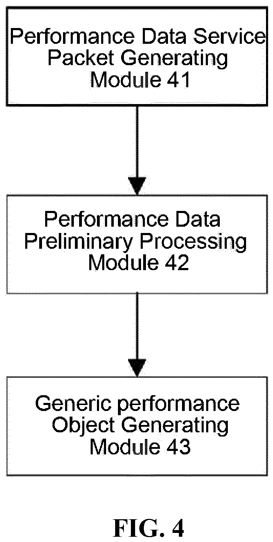

In order to realize the above method, the disclosure further provides a performance data management device. As shown in Fig. 4, the device includes: a performance data service packet generating module 41, a performance data preliminary processing module 42 and a generic performance object generating module 43; wherein:

The performance data service packet generating module 41 may be realized by the CPU and the memory of a personal computer (PC) in the upper-level network management system, and is configured for establishing a performance data dimension and establishing and installing a performance data service packet according to the performance data dimension;

The performance data preliminary processing module 42 may be realized by the CPU of a PC in the upper-level network management system, and is configured for installing the performance data service packet generated in a system model, parsing an instance of the performance data dimension in the service packet, and adding the obtained instance of the performance data dimension into the system model;

The generic performance object generating module 43 may be realized by the CPU and the display of a PC in the upper-level network management system, and is configured for converting the instance of the performance data dimension in the system model into a multiple-version generic performance object and a multiple-vendor generic performance object according to a performance object conversion rule, and outputting a data view.

Specifically, the performance data service packet generating module 41 is configured for establishing a performance data dimension, which includes establishing a resource type dimension, a performance object dimension and a performance index dimension;

Specifically, the performance data service packet generating module 41 is configured for establishing a resource type dimension, wherein the resource type dimension includes a specific resource type dimension $\vec{d}_{res\text{-}type}$ and a generic resource type dimension $\vec{d}_{c\text{-}res\text{-}type}$; wherein, the specific resource type dimension is established by $\vec{d}_{res\text{-}type}$ = (Private Network, Vendor, Resource Type Name)$^T$, and the generic resource type dimension is established by $\vec{d}_{c\text{-}res\text{-}type}$ = (Private Network, 0, Resource Type Name)$^T$.

Specifically, the performance data service packet generating module 41 is configured for establishing a performance object dimension, including:

establishing a specific performance object dimension by $\vec{d}_{po}$ = (Private Network, Vendor, Resource Type, Version, Performance Object Name, Grain Size)$^T$;

establishing a multiple-version generic performance object dimension by $\vec{d}_{po\text{-}multi\text{-}version}$ = (Private Network, Vendor, Resource Type, 0, Performance Object Name, Grain Size)$^T$; and

establishing a multiple-vendor generic performance object dimension by $\vec{d}_{po\text{-}multi\text{-}vendor}$ = (Private Network, 0, Resource Type, 0, Performance Object Name, Grain Size)$^T$.

Specifically, the performance data service packet generating module 41 is configured for establishing a performance index dimension, including:

establishing a specific performance index dimension by $\vec{d}_{pi}$ = (Private Network, Vendor, Resource Type, Version, Performance Object Name, Grain Size, Performance Index Name);

establishing a multiple-version performance index dimension by $\vec{d}_{pi\text{-}multi\text{-}version}$ = (Private Network, Vendor, Resource Type, 0, Performance Object Name, Grain Size, Performance Index Name); and

establishing a multiple-vendor performance index dimension by $\vec{d}_{pi\text{-}multi\text{-}vendor}$ = (Private Network, 0, Resource Type, 0, Performance Object Name, Grain Size, Performance Index Name).

Specifically, the performance data service packet generating module 41 is configured for establishing and installing a performance data service packet according to the performance data dimension, including: acquiring the performance data information configured for determining all resource types, all performance objects and all performance indexes; and establishing and installing a performance data service packet based on the performance data information.

The acquiring the performance data information for determining all resource types, all performance objects and all performance indexes includes: acquiring, by the performance data service packet generating module 41 via a northbound interface, performance data specific information managed by a lower-level network management system, wherein the performance data specific information includes: private network, vendor, resource type, version and grain size.

Preferably, the establishing and installing a performance data service packet based on the performance data information includes: establishing, by the performance data service packet generating module 41, an instance of the performance data dimension according to the performance data information, and compressing the established instance of the performance data dimension into a performance data service packet; wherein, the establishing an instance of the performance data dimension includes the steps of:

Step 1: establishing a generic resource type instance according to $\vec{d}_{c\text{-}res\text{-}type}$, wherein the generic resource type instance is stored in a generic resource type data sheet, and the generic resource type managed by the lower-level network management system connected with the upper-level network management system is recorded in the generic resource type data sheet;

Step 2: establishing a specific resource type instance according to $\vec{d}_{res\text{-}type}$, wherein the specific resource type instance is stored in a specific resource type data sheet, and the specific resource type managed by the lower-level network management system connected with the upper-level network management system is recorded in the specific resource type data sheet, each specific resource type data sheet is mapped to a corresponding generic resource type data sheet, and the corresponding generic resource type data sheet is a generic resource type data sheet where the generic resource type instance to which the specific resource type instance belongs is stored;

Step 3: establishing a performance object instance according to $\vec{d}_{po}$, wherein, the performance object instance is stored in a performance object data sheet, the performance object managed by the lower-level network management system connected with the upper-level network management system is recorded in the performance object data sheet, each performance object data sheet is mapped to a corresponding specific resource type data sheet, and the corresponding specific resource type data sheet is a specific resource type data sheet where the specific resource type instance to which the performance object instance belongs is stored.

Specifically, in Step 3, the establishing a performance object instance according to $\vec{d}_{po}$ includes: defining the names of performance objects or performance indexes with the same service meaning as the same of performance objects or performance indexes; and renaming performance objects and performance indexes with the same name but different service meanings in order to eliminate ambiguity.

In the disclosure, the performance object conversion rule includes:

defining $r_1(\vec{d}_{res\text{-}type})$ as: $\vec{d}_{c\text{-}res\text{-}type} = [\vec{i}, \vec{o}, \vec{i}] \times \vec{d}_{res\text{-}type}$;

defining $r_2(d_{po})$ as: $\vec{d}_{po\text{-}multi\text{-}version} = [\vec{i}, \vec{i}, \vec{i}, \vec{o}, \vec{i}, \vec{i}] \times \vec{d}_{po}$;

defining $r_3(\vec{d}_{po})$ as: $\vec{d}_{po\text{-}multi\text{-}vendor} = [\vec{i}, \vec{o}, \vec{i}, \vec{o}, \vec{i}, \vec{i}] \times \vec{d}_{po}$;

defining $r_4(\vec{d}_{pi})$ as: $\vec{d}_{pi\text{-}multi\text{-}version} = [\vec{i}, \vec{i}, \vec{i}, \vec{o}, \vec{i}, \vec{i}, \vec{i}] \times \vec{d}_{pi}$;

defining $r_5(\vec{d}_{pi})$ as: $\vec{d}_{pi\text{-}multi\text{-}vendor} = [\vec{i}, \vec{o}, \vec{i}, \vec{o}, \vec{i}, \vec{i}, \vec{i}] \times \vec{d}_{pi}$;

Wherein, $r_1()$ represents a function for realizing the conversion from the specific resource type dimension $\vec{d}_{res\text{-}type}$ to the generic resource type dimension $\vec{d}_{c\text{-}res\text{-}type}$, $r_2()$ represents a function for realizing the conversion from the specific performance object dimension $\vec{d}_{po}$ to the multiple-version generic performance object dimension $\vec{d}_{po\text{-}multi\text{-}version}$, $r_3()$ represents a function for realizing the conversion from the specific performance object dimension $\vec{d}_{po}$ to the multiple-vendor generic performance object dimension $\vec{d}_{po\text{-}multi\text{-}vendor}$, $r_4()$ represents a function for realizing the conversion from the specific performance index dimension $\vec{d}_{pi}$ to the multiple-version generic performance index dimension $\vec{d}_{pi\text{-}multi\text{-}version}$, $r_5()$ represents a function for realizing the conversion from the specific performance index dimension $\vec{d}_{pi}$ to the multiple-vendor generic performance index dimension $\vec{d}_{pi\text{-}multi\text{-}vendor}$, $\vec{i} = 0, \dots, 1, 0, \dots, 0)^T$ is an unit vector, and $\vec{0} = [0, 0, \dots 0, \dots 0]^T$ is a zero vector.

Specifically, the generic performance object generating module 43 is configured for converting the instance of the performance data dimension in the system model into a multiple-version generic performance object according to a performance object conversion rule and outputting a data view, including the steps of:

Step 1: determining a set *poGroup* of performance objects with the same private network, the same vendor, different versions, the same name and the same grain size when a performance object $po_i$ is newly added to the system model, wherein the performance object set already installed in the system model is $P = \{po_1, po_j, \dots po_m, \dots po_l\}$, and the *poGroup* is determined by set element $po_j$:

$$poGroup = \{po_j \mid f^{-1}(po_j) \neq r_2(f^{-1}(po_i)) \land r_2(f^{-1}(po_j)) = r_2(f^{-1}(po_i)), po_j \in P\}$$

Step 2: determining a set $PI_j$ of performance indexes that belong to the performance object set *poGroup*, wherein $PI_j$ is determined by set element $pi_i$:

$$PI_j = \{pi_i \mid pi_i \in po_j, po_j \in poGroup\}$$

wherein, $j \in [1, poGroup.size]$, and *poGroup.size* represents the size of *poGroup*;

Step 3: determining a set $\vec{d}_{pi\text{-}multi\text{-}version}Group$ of performance index dimensions that belong to $PI_j$ and are of multiple-version:

$$\vec{d}_{pi\text{-}multi\text{-}version}Group = \bigcap\nolimits_{j=1}^{poGroup.size} \{r_4(f^{-1}(pi_j)), pi_j \in PI_j\}$$

Step 4: determining a set $PI'_j$ of performance indexes that belong to $\vec{d}_{pi\text{-}multi\text{-}version}Group$ and have the same name, wherein $PI'_j$ is determined by set element $pi_m$, and except for version information, other dimension information for the set elements that belong to $PI'_j$ are same as the defined dimension of P:

$$PI'_j = \{pi_m \mid r_4(f^{-1}(pi_m)) \in \vec{d}_{pi\text{-}multi\text{-}version}Group, pi_m \in PI_j\}$$

Step 5: creating a multiple-version generic performance object and index:

At $\vec{d}_{po\text{-}multi\text{-}version} = r_2(f^{-1}(po_i))$, a multiple-version generic performance object $po_{multi\text{-}version}$ is created by taking $po_i$ as a template;
At $\{\vec{d}_{pi\text{-}multi\text{-}version} \mid \vec{d}_{pi\text{-}multi\text{-}version} \in \vec{d}_{pi\text{-}multi\text{-}version}Group\}$, a multiple-version performance index is created by taking $\{pi_x \mid r_4(f^{-1}(pi_x)) = \vec{d}_{pi\text{-}multi\text{-}version} \in \vec{d}_{pi\text{-}multi\text{-}version}Group\}$ as a template;

Step 6: outputting a data view;
A data view v is output on the basis of $\{tableName(po_j), \{columnName(pi_x) \mid pi_x \in PI'_j\} j \in [1, poGroup.size]\}$, and v is taken as a data sheet of $po_{multi\text{-}version}$, wherein $tableName(po_j)$ is the name of the data sheet where performance object $po_j$ exists, and $columnName(pi_x)$ is the column name of $pi_x$.

The generic performance object generating module 43 is configured for converting the instance of the performance data dimension in the system model into a multiple-vendor generic performance object according to a performance object conversion rule and outputting a data view, including the steps of:

Step 1: determining a set *poGroup* of performance objects with the same private network, different vendors, different versions, the same name and the same grain size when a performance object $po_i$ is newly added to the system model, wherein the performance object set already installed in the system model is $P = \{po_1, po_j,......po_m,......po_l\}$, and the *poGroup* is determined by set element $po_j$ :

$$poGroup = \{po_j \mid f^{-1}(po_j) \neq r_3(f^{-1}(po_i)) \wedge r_3(f^{-1}(po_j)) = r_3(f^{-1}(po_i)), po_j \in P\}$$

Step 2: determining a set $PI_j$ of performance indexes that belong to the performance object set *poGroup*, wherein $PI_j$ is determined by set element $pi_i$ :

$$PI_j = \{pi_i \mid pi_i \in po_j, po_j \in poGroup\}$$

wherein, $j \in [1, poGroup.size]$, and *poGroup.size* represents the size of *poGroup*;

Step 3: determining a set $\vec{d}_{pi\text{-}multi\text{-}vendor}Group$ of performance index dimensions that belong to $PI_j$ and have multiple vendors:

$$\vec{d}_{pi-multi-vendor} Group = \bigcap_{j=1}^{poGroup.size} \{r_5(f^{-1}(pi_j)), pi_j \in PI_j\}$$

Step 4: determining a set $PI'_j$ of performance indexes that belong to $\vec{d}_{pi-multi-vendor}$ Group and have the same name, wherein $PI'_j$ is determined by set element $pi_m$, and except for vendor and version information, other dimension information for the set elements that belong to $PI'_j$ are same as the defined dimension of P :

$$PI'_j = \{pi_m \mid r_5(f^{-1}(pi_m)) \in \vec{d}_{pi-multi-vendor} Group, pi_m \in PI_j\}$$

Step 5: creating a multiple-vendor generic performance object and index;

At $\vec{d}_{po-multi-vendor} = r_3 f^{-1}(po_m))$, a multiple-vendor generic performance object $po_{multi-vendor}$ is created by taking $po_j$ as a template;

At $\{\vec{d}_{pi-multi-vendor} \mid \vec{d}_{pi-multi-vendor} \in \vec{d}_{pi-multi-vendor} Group\}$, a multiple-vendor performance index is created by taking $\{pi_x \mid r_5(f^{-1}(pi_x)) = \vec{d}_{pi-multi-vendor} \in \vec{d}_{pi-multi-vendor} Group\}$ as a template;

Step 6: outputting a data view;

A data view v is output on the basis of $\{tableName(po_j), \{columnName(pi_x) \mid pi_x \in PI'_j\} \mid j \in [1, poGroup.size]\}$, and v is taken as a data sheet of $po_{multi-vendor}$, wherein $tableName(po_j)$ is the name of the data sheet in which performance object $po_j$ exists, and $columnName(pi_x)$ is the column name of $pi_x$.

Preferably, the disclosure further provides a performance data management system, which includes the performance data management device and the data base, wherein the data base is configured for storing a system model.

The above descriptions only show some preferred embodiments of the disclosure, rather than limiting the protection scope of the disclosure.

**Industrial Applicability**

With the performance data management method and the performance data management device according to the embodiments of the disclosure, the difficulty in performance data management and maintenance can be reduced greatly, and also, because in the solution of the disclosure, data with different versions from different vendors are logically stored separately and the processing logic is relatively simple, the flexibility and maintainability of the system may be enhanced. In terms of the usage mode of model and data, the model and data related to vendor and version are same as the model and data unrelated to vendor and version. Therefore, it may be accessed via consistent interface and logic, and for multiple-vendor and multiple-version data, it may be viewed and analyzed separately, or it may be viewed and analyzed uniformly, hence enabling flexible and convenient process.

**Claims**

**1.** A performance data management method, **characterized by** comprising:

establishing (101), by an upper-level network management system, a performance data dimension comprising a resource type dimension, a performance object dimension and a performance index dimension, acquiring the performance data information configured for determining a resource type, a performance object and a performance index, and establishing and installing a performance data service packet based on the performance data information;
parsing (102) the performance data service packet to obtain an instance of the performance data dimension, and adding the instance of the performance data dimension into a system model; and
converting (103) the instance of the performance data dimension in the system model into a multiple-version generic performance object and a multiple-vendor generic performance object according to a performance object conversion rule, and outputting a data view;

wherein the establishing a resource type dimension comprises:

the resource type dimension comprises: specific resource type dimension $\vec{d}_{res\text{-}type}$ and generic resource type dimension $\vec{d}_{c\text{-}res\text{-}type}$; wherein

the specific resource type dimension is established by establishing $\vec{d}_{res\text{-}type}$ = (Private Network, Vendor, Resource Type Name)$^T$; and

the generic resource type dimension is established by $\vec{d}_{c\text{-}res\text{-}type}$ = (Private Network, 0, Resource Type Name)$^T$;

the establishing a performance object dimension comprises:

establishing a specific performance object dimension by $\vec{d}_{po}$ = (Private Network, Vendor, Resource Type, Version, Performance Object Name, Grain Size)$^T$;

establishing a multiple-version generic performance object dimension by $\vec{d}_{po\text{-}multi\text{-}version}$ = (Private Network, Vendor, Resource Type, 0, Performance Object Name, Grain Size)$^T$; and

establishing a multiple-vendor generic performance object dimension by $\vec{d}_{po\text{-}multi\text{-}vendor}$ = (Private Network, 0, Resource Type, 0, Performance Object Name, Grain Size)$^T$; and

the establishing a performance index dimension comprises:

establishing a specific performance index dimension by $\vec{d}_{pi}$ = (Private Network, Vendor, Resource Type, Version, Performance Object Name, Grain Size, Performance Index Name)$^T$;

establishing a multiple-version performance index dimension by $\vec{d}_{pi\text{-}multi\text{-}version}$ = (Private Network, Vendor, Resource Type, 0, Performance Object Name, Grain Size, Performance Index Name)$^T$; and

establishing a multiple-vendor performance index dimension by $\vec{d}_{pi\text{-}multi\text{-}version}$ = (Private Network, 0, Resource Type, 0, Performance Object Name, Grain Size, Performance Index Name)$^T$.

2.  The management method according to claim 1, wherein, the acquiring the performance data information configured for determining a resource type, a performance object and a performance index comprises: acquiring, by an upper-level network management system via a northbound interface, performance data specific information managed by a lower-level network management system, wherein the performance data specific information comprises: private network, vendor, resource type, version and grain size.

3.  The management method according to claim 1, wherein, the establishing and installing a performance data service packet based on the performance data information comprises: establishing an instance of the performance data dimension according to the performance data information, and compressing the established instance of the performance data dimension into a performance data service packet; wherein, the establishing an instance of the performance data dimension comprises the steps of:

step 1: establishing a generic resource type instance according to according to $\vec{d}_{c\text{-}res\text{-}type}$, wherein, the generic resource type instance is stored in a generic resource type data sheet, and the generic resource type managed by the lower-level network management system connected with the upper-level network management system is recorded in the generic resource type data sheet;

step 2: establishing a specific resource type instance according to $\vec{d}_{res\text{-}type}$, wherein, the specific resource type instance is stored in a specific resource type data sheet, and the specific resource type managed by the lower-level network management system connected with the upper-level network management system is recorded in the specific resource type data sheet, each specific resource type data sheet is mapped to a corresponding generic resource type data sheet, and the corresponding generic resource type data sheet is a generic resource type data sheet where the generic resource type instance to which the specific resource type instance belongs is stored;

step 3: establishing a performance object instance according to $\vec{d}_{po}$, wherein, the performance object instance is stored in a performance object data sheet, the performance object managed by the lower-level network management system connected with the upper-level network management system is recorded in the performance object data sheet, each performance object data sheet is mapped to a corresponding specific resource type data sheet, and the corresponding specific resource type data sheet is a specific resource type data sheet where the specific resource type instance to which the performance object instance belongs is stored.

4.  The management method according to claim 3, wherein, the establishing a performance object instance according

to $\vec{d}_{po}$ comprises:

defining the names of performance objects or performance indexes having the same service meaning as the same names of performance objects or performance indexes; and
renaming performance objects and performance indexes having the same name but different service meanings.

5. The management method according to claim 4, wherein, the performance object conversion rule comprises:

$$\text{defining } r_1(\vec{d}_{res-type}) \text{ as: } \vec{d}_{c-res-type} = [\vec{i}, \vec{o}, \vec{i}] \times \vec{d}_{res-type} ;$$

$$\text{defining } r_2(\vec{d}_{po}) \text{ as: } \vec{d}_{po-multi-version} = [\vec{i}, \vec{i}, \vec{i}, \vec{o}, \vec{i}, \vec{i}] \times \vec{d}_{po} ;$$

$$\text{defining } r_3(\vec{d}_{po}) \text{ as: } \vec{d}_{po-multi-vendor} = [\vec{i}, \vec{o}, \vec{i}, \vec{o}, \vec{i}, \vec{i}] \times \vec{d}_{po} ;$$

$$\text{defining } r_4(\vec{d}_{pi}) \text{ as: } \vec{d}_{pi-multi-version} = [\vec{i}, \vec{i}, \vec{i}, \vec{o}, \vec{i}, \vec{i}, \vec{i}] \times \vec{d}_{pi} ;$$

$$\text{defining } r_5(\vec{d}_{pi}) \text{ as: } \vec{d}_{pi-multi-vendor} = [\vec{i}, \vec{o}, \vec{i}, \vec{o}, \vec{i}, \vec{i}, \vec{i}] \times \vec{d}_{pi} ;$$

wherein, $r_1()$ represents a function for realizing the conversion from the specific resource type dimension $\vec{d}_{res-type}$ to the generic resource type dimension $\vec{d}_{c-res-type}$, $r_2()$ represents a function for realizing the conversion from the specific performance object dimension $\vec{d}_{po}$ to the multiple-version generic performance object dimension $\vec{d}_{po-multi-version}$, $r_3()$ represents a function for realizing the conversion from the specific performance object dimension $\vec{d}_{po}$ to the multiple-vendor generic performance object dimension $\vec{d}_{po-multi-vendor}$, $r_4()$ represents a function for realizing the conversion from the specific performance index dimension $\vec{d}_{pi}$ to the multiple-version generic performance index dimension $\vec{d}_{pi-multi-version}$, and $r_5()$ represents a function for realizing the conversion from the specific performance index dimension $\vec{d}_{pi}$ to the multiple-vendor generic performance index dimension $\vec{d}_{po-multi-vendor}$, $\vec{i} = (0, \dots , 1, 0, \dots , 0)^T$ is an unit vector, and $\vec{0} = [0, 0, \dots 0, \dots 0]^T$ is a zero vector.

6. The management method according to claim 5, wherein, the converting the instance of the performance data dimension in the system model into a multiple-version generic performance object according to a performance object conversion rule and outputting a data view comprises the steps of:

step 1: determining a set *poGroup* of performance objects having the same private network, the same vendor, different versions, the same name and the same grain size when a performance object *po$_i$* is newly added to the system model, wherein the performance object set already installed in the system model is $P = \{po_1, po_j,......po_m,......po_l\}$, and the *poGroup* is determined by set elements *po$_j$*:

$$poGroup = \{po_j \mid f^{-1}(po_j) \neq r_2(f^{-1}(po_i)) \wedge r_2(f^{-1}(po_j)) = r_2(f^{-1}(po_i)), po_j \in P\} ;$$

step 2: determining a set *PI$_j$* of performance indexes that belong to the performance object set *poGroup*, wherein *PI$_j$* is determined by set element *pi$_l$*:
*PI$_j$* = {*pi$_l$* | *pi$_l$* ∈ *po$_j$*, *po$_j$* ∈ *poGroup*}, wherein, $j \in [1, poGroup.size]$, and *poGroup.size* represents the size of *poGroup*;
step 3: determining a set $\vec{d}_{pi-multi-version}$ *Group* of performance index dimensions that belong to *PI$_j$* and are of

multiple-version:

$$\vec{d}_{pi-multi-version}\,Group = \bigcap_{j=1}^{poGroup.size} \{r_4(f^{-1}(pi_j\,)),\, pi_j \in PI_j\}$$

step 4: determining a set $PI'_j$ of performance indexes that belong to $\vec{d}_{pi-multi-version}$ $Group$ and have the same name, wherein, $PI'_j$ is determined by set element $pi_m$, and except for version information, other dimension information for the set elements that belong to $PI'_j$ are same as the defined dimension of P:

$$PI'_j = \{pi_m \mid r_4(f^{-1}(pi_m)) \in \vec{d}_{pi-multi-version} Group,\, pi_m \in PI_j\}$$

step 5: creating a multiple-version generic performance object and index:

at $\vec{d}_{po-multi-version} = r_2(f^{-1}(po_i))$, a multiple-version generic performance object $po_{multi-version}$ is created by taking $po_i$ as a template;
at $\{\vec{d}_{pi-multi-version} \mid \vec{d}_{pi-multi-version} \in \vec{d}_{pi-multi-version}Group\}$, a multiple-version generic performance index is created by taking $\{pi_x \mid r_4(f^{-1}(pi_x)) = \vec{d}_{pi-multi-version} \in \vec{d}_{pi-multi-version}Group\}$ as a template;

step 6: outputting a data view:
a data view v is output based on $\{tableName(po_j), \{columnName(pi_x) \mid pi_x \in PI'_j\} \mid j \in [1, poGroup.size]\}$, and v is taken as a data sheet of $po_{multi-version}$, wherein $tableName(po_j)$ is the name of the data sheet where the performance object $po_j$ exists, and $columnName(pi_x)$ is the column name of $pi_x$.

7. The management method according to claim 5, wherein, the converting the instance of the performance data dimension in the system model into a multiple-vendor generic performance object according to a performance object conversion rule and outputting a data view comprises the steps of:

step 1: determining a set $poGroup$ of performance objects having the same private network, different vendors, different versions, the same name and the same grain size when a performance object $po_i$ is newly added to the system model, wherein the performance object set already installed in the system model is $P = \{po_1, po_j,......po_m,......po_l\}$, and the $poGroup$ is determined by set element $po_j$ :

$$poGroup = \{po_j \mid f^{-1}(po_j) \neq r_3(f^{-1}(po_i)) \wedge r_3(f^{-1}(po_j)) = r_3(f^{-1}(po_i)),\, po_j \in P\}\,;$$

step 2: determining a set $PI_j$ of performance indexes that belong to the performance object set $poGroup$, wherein $PI_j$ is determined by set element $pi_l$ :
$PI_j = \{pi_l \mid pi_l \in po_j,\, po_j \in pogroup\}$, wherein, $j \in [1, poGroup.size]$, and $poGroup.size$ represents the size of $poGroup$ ;
step 3: determining a set $\vec{d}_{pi-multi-vendor}$ $Group$ of performance index dimensions that belong to $PI_j$ and are of multiple-vendor:

$$\vec{d}_{pi-multi-vendor}\,Group = \bigcap_{j=1}^{poGroup.size} \{r_5(f^{-1}(pi_j\,)),\, pi_j \in PI_j\}\,;$$

step 4: determining a set $PI'_j$ of performance indexes that belong to $\vec{d}_{pi-multi-vendor}$ $Group$ and have the same name, wherein $PI'_j$ is determined by set element $pi_m$, and except for vendor and version information, other dimension information for the set elements that belong to $PI'_j$ are same as the defined dimension of P:

$$PI'_j = \{pi_m \mid r_5(f^{-1}(pi_m)) \in \vec{d}_{pi-multi-vendor} Group,\, pi_m \in PI_j\}$$

step 5: creating a multiple-vendor generic performance object and index:

at $\vec{d}_{po\text{-}multi\text{-}vendor} = r_3f^{-1}(po_m))$, a multiple-vendor generic performance object $po_{multi\text{-}vendor}$ is created by taking $po_i$ as a template;

at $\{\vec{d}_{pi\text{-}multi\text{-}vendor} \mid \vec{d}_{pi\text{-}multi\text{-}vendor} \in \vec{d}_{pi\text{-}multi\text{-}vendor}Group\}$, a multiple-vendor performance index is created by taking $\{pi_x \mid r_5 (f^{-1} (pi_x)) = \vec{d}_{pi\text{-}multi\text{-}vendor} \in \vec{d}_{pi\text{-}multi\text{-}vendor}Group\}$ as a template;

step 6: outputting a data view:

a data view v is output on the basis of $\{tableName(po_j), \{columnName(pi_x) \mid pi_x \in PI'_j \mid j \in [1, poGroup.size]\}$, and v is taken as a data sheet of $po_{multi\text{-}vendor}$, wherein $tableName(po_j)$ is the name of the data sheet where the performance object $po_j$ exists, and $columnName(pi_x)$ is the column name of $pi_x$.

8. A performance data management device, comprising: a performance data service packet generating module (41), a performance data preliminary processing module (42) and a generic performance object generating module (43); wherein:

the performance data service packet generating module (41) is configured for establishing a performance data dimension, which comprises a resource type dimension, a performance object dimension and a performance index dimension, and acquiring the performance data information configured for a determining resource type, a performance object and a performance index; and establishing and installing a performance data service packet based on the performance data information;

the performance data preliminary processing module (42) is configured for installing the generated performance data service packet in a system model, parsing the service packet to obtain an instance of the performance data dimension, and adding the obtained instance of the performance data dimension into the system model; and

the generic performance object generating module (43) is configured for converting the instance of the performance data dimension in the system model into a multiple-version generic performance object and a multiple-vendor generic performance object according to a performance object conversion rule, and outputting a data view;

wherein the resource type dimension comprises: specific resource type dimension $\vec{d}_{res\text{-}type}$ and generic resource type dimension $\vec{d}_{c\text{-}res\text{-}type}$ ; wherein,

the performance data service packet generating module (41) is configured for:

establishing a specific resource type dimension by establishing $\vec{d}_{res\text{-}type}$ = (Private Network, Vendor, Resource Type Name)$^T$; and

establishing a generic resource type dimension by $\vec{d}_{c\text{-}res\text{-}type}$ = (private Network, 0, Resource Type Name)$^T$;

wherein the performance data service packet generating module (41) is configured for:

establishing a specific performance object dimension by $\vec{d}_{po}$ = (Private Network, Vendor, Resource Type, Version, Performance Object Name, Grain Size)$^T$;

establishing a multiple-version generic performance object dimension by $\vec{d}_{po\text{-}multi\text{-}version}$ = (Private Network, Vendor, Resource Type, 0, Performance Object Name, Grain Size)$^T$; and

establishing a multiple-vendor generic performance object dimension by $\vec{d}_{po\text{-}milti\text{-}vendor}$ = (Private Network, 0, Resource Type, 0, Performance Object Name, Grain Size)$^T$;

the performance data service packet generating module (41) is configured for:

establishing a specific performance index dimension by $\vec{d}_{pi}$ = (Private Network, Vendor, Resource Type, Version, Performance Object Name, Grain Size, Performance Index Name)$^T$;

establishing a multiple-version performance index dimension by $\vec{d}_{pi\text{-}multi\text{-}version}$ = (Private Network, Vendor, Resource Type, 0, Performance Object Name, Grain Size, Performance Index Name)$^T$; and

establishing a multiple-vendor performance index dimension by $\vec{d}_{pi\text{-}multi\text{-}vendor}$ = (Private Network, 0, Resource Type, 0, Performance Object Name, Grain Size, Performance Index Name)$^T$.

# EP 3 073 675 B1

**Patentansprüche**

1. Verfahren zur Verwaltung von Leistungsdaten, **gekennzeichnet dadurch, dass** es umfasst:

   Einrichten (101), durch ein übergeordnetes Netzwerkverwaltungssystem, einer Leistungsdatendimension, umfassend eine Ressourcentypdimension, eine Leistungsobjektdimension und eine Leistungsindexdimension, Erfassen der Leistungsdateninformationen, die zum Bestimmen eines Ressourcentyps, eines Leistungsobjekts und eines Leistungsindex konfiguriert sind, und Einrichten und Installieren eines Leistungsdatendienstpakets basierend auf den Leistungsdateninformationen;
   Parsen (102) des Leistungsdatendienstpakets zum Erhalten einer Instanz der Leistungsdatendimension, und Addieren der Instanz der Leistungsdatendimension in ein Systemmodell; und
   Konvertieren (103) der Instanz der Leistungsdatendimension in dem Systemmodell in ein generisches Mehrversion-Leistungsobjekt und ein generisches Mehranbieter-Leistungsobjekt gemäß einer Leistungsobjekt-Konvertierungsregel, und Ausgeben einer Datenansicht;
   wobei das Einrichten einer Ressourcentypdimension umfasst:

   die Ressourcentypdimension umfasst: eine spezifische Ressourcentypdimension $\vec{d}_{res\text{-}type}$ und eine generische Ressourcentypdimension $\vec{d}_{c\text{-}res\text{-}type}$ ; wobei
   die spezifische Ressourcentypdimension eingerichtet wird durch Einrichten von $\vec{d}_{res\text{-}type}$ = (Privates Netzwerk, Anbieter, Ressourcentypname)$^T$; und
   die generische Ressourcentypdimension eingerichtet wird durch $\vec{d}_{c\text{-}res\text{-}type}$ = (Privates Netzwerk, 0, Ressourcentypname)$^T$;

   das Einrichten einer Leistungsobjektdimension umfasst:

   Einrichten einer spezifischen Leistungsobjektdimension durch $\vec{d}_{po}$ = (Privates Netzwerk, Anbieter, Ressourcentyp, Version, Leistungsobjektname, Korngröße)$^T$;
   Einrichten einer generischen Mehrversion-Leistungsobjektdimension durch $\vec{d}_{po\text{-}mult\text{-}version}$ = (Privates Netzwerk, Anbieter, Ressourcentyp, 0, Leistungsobjektname, Korngröße)$^T$; und
   Einrichten einer generischen Mehranbieter-Leistungsobjektdimension durch $\vec{d}_{po\text{-}multi\text{-}vendor}$ = (Privates Netzwerk, 0, Ressourcentyp, 0, Leistungsobjektname, Korngröße)$^T$; und

   das Einrichten einer Leistungsindexdimension umfasst:

   Einrichten einer spezifischen Leistungsindexdimension durch $\vec{d}_{pi}$ = (Privates Netzwerk, Anbieter, Ressourcentyp, Version, Leistungsobjektname, Korngröße, Leistungsindexname)$^T$;
   Einrichten einer Mehrversion-Leistungsindexdimension durch $\vec{d}_{pi\text{-}multi\text{-}version}$ = (Privates Netzwerk, Anbieter, Ressourcentyp, 0, Leistungsobjektname, Korngröße, Leistungsindexname)$^T$; und
   Einrichten einer Mehranbieter-Leistungsindexdimension durch $\vec{d}_{pi\text{-}multi\text{-}vendor}$ = (Privates Netzwerk, 0, Ressourcentyp, 0, Leistungsobjektname, Korngröße, Leistungsindexname)$^T$.

2. Verwaltungsverfahren nach Anspruch 1, wobei das Erfassen der Leistungsdateninformationen, die zum Bestimmen eines Ressourcentyps, eines Leistungsobjekts und eines Leistungsindex konfiguriert sind, umfasst: Erfassen, durch ein übergeordnetes Netzwerkverwaltungssystem über eine nordgebundene Schnittstelle, von leistungsdatenspezifischen Informationen, die von einem untergeordneten Netzwerkmanagementsystem verwaltet werden, wobei die leistungsdatenspezifischen Informationen umfassen: privates Netzwerk, Anbieter, Ressourcentyp, Version und Korngröße.

3. Verwaltungsverfahren nach Anspruch 1, wobei das Einrichten und Installieren eines Leistungsdatendienstpakets basierend auf den Leistungsdateninformationen umfasst: Einrichten einer Instanz der Leistungsdatendimension gemäß der Leistungsdateninformationen und Komprimieren der eingerichteten Instanz der Leistungsdatendimension zu einem Leistungsdatendienstpaket; wobei das Einrichten einer Instanz der Leistungsdatendimension die folgenden Schritte umfasst:

   Schritt 1: Einrichten einer generischen Ressourcentypinstanz gemäß $\vec{d}_{c\text{-}res\text{-}type}$, wobei die generische Ressourcentypinstanz in einem generischen Ressourcentypdatenblatt gespeichert ist und der generische Ressourcentyp, der durch das untergeordnete Netzwerkverwaltungssystem verwaltet wird, das mit dem übergeordneten Netzwerkverwaltungssystem verbunden ist, in dem generischen Ressourcentypdatenblatt aufgezeichnet ist;

Schritt 2: Einrichten einer spezifischen Ressourcentypinstanz gemäß $\vec{d}_{res\text{-}type}$, wobei die spezifische Ressourcentypinstanz in einem spezifischen Ressourcentypdatenblatt gespeichert ist und der spezifische Ressourcentyp, der durch das untergeordnete Netzwerkverwaltungssystem verwaltet wird, das mit dem übergeordneten Netzwerkverwaltungssystem verbunden ist, in dem spezifischen Ressourcentypdatenblatt aufgezeichnet ist, wobei jedes spezifische Ressourcentypdatenblatt auf einem entsprechenden generischen Ressourcentypdatenblatt abgebildet ist, und das entsprechende generische Ressourcentypdatenblatt ein generisches Ressourcentypdatenblatt ist, in dem die generische Ressourcentypinstanz, zu der die spezifische Ressourcentypinstanz gehört, gespeichert ist;

Schritt 3: Einrichten einer Leistungsobjektinstanz gemäß $\vec{d}_{po}$, wobei die Leistungsobjektinstanz in einem Leistungsobjektdatenblatt gespeichert ist, das Leistungsobjekt, das durch das untergeordnete Netzwerkverwaltungssystem verwaltet wird, das mit dem übergeordneten Netzwerkverwaltungssystem verbunden ist, in dem Leistungsobjektdatenblatt aufgezeichnet ist, jedes Leistungsobjektdatenblatt in einem entsprechenden spezifischen Ressourcentypdatenblatt abgebildet ist, und das entsprechende spezifische Ressourcentypdatenblatt ein spezifisches Ressourcentypdatenblatt ist, in dem die spezifische Ressourcentypinstanz, zu der das Leistungsobjekt gehört, gespeichert ist.

4. Verwaltungsverfahren nach Anspruch 3, wobei das Einrichten einer Leistungsobjektinstanz gemäß $\vec{d}_{po}$ umfasst:

Definieren der Namen der Leistungsobjekte oder Leistungsindizes, die dieselbe Dienstbedeutung haben wie die gleichen Namen der Leistungsobjekte oder Leistungsindizes; und
Umbenennen der Leistungsobjekte und Leistungsindizes, die den gleichen Namen, aber andere Dienstbedeutungen haben.

5. Verwaltungsverfahren nach Anspruch 4, wobei die Leistungsobjekt-Konvertierungsregel umfasst:

Definieren von

$$r_1(\vec{d}_{res\text{-}type}) \text{ als: } \vec{d}_{c\text{-}res\text{-}type} = [\vec{i}, \vec{o}, \vec{i}] \times \vec{d}_{res\text{-}type} ;$$

Definieren von

$$r_2(\vec{d}_{po}) \text{ als: } \vec{d}_{po\text{-}multi\text{-}version} = [\vec{i}, \vec{i}, \vec{i}, \vec{o}, \vec{i}, \vec{i}] \times \vec{d}_{po} ;$$

Definieren von

$$r_3(\vec{d}_{po}) \text{ als: } \vec{d}_{po\text{-}multi\text{-}vendor} = [\vec{i}, \vec{o}, \vec{i}, \vec{o}, \vec{i}, \vec{i}] \times \vec{d}_{po} ;$$

Definieren von

$$r_4(\vec{d}_{pi}) \text{ als: } \vec{d}_{pi-multi-version} = [\vec{i}, \vec{i}, \vec{i}, \vec{o}, \vec{i}, \vec{i}, \vec{i}] \times \vec{d}_{pi}$$ ;

Definieren von

$$r_5(\vec{d}_{pi}) \text{ als: } \vec{d}_{pi-multi-vendor} = [\vec{i}, \vec{o}, \vec{i}, \vec{o}, \vec{i}, \vec{i}, \vec{i}] \times \vec{d}_{pi}$$ ;

wobei $r_1()$ für eine Funktion zum Realisieren der Konvertierung von der spezifischen Ressourcentypdimension $\vec{d}_{res-type}$ zu der generischen Ressourcentypdimension $\vec{d}_{res-type}$ steht, $r_2()$ für eine Funktion zum Realisieren der Konvertierung von der spezifischen Leistungsobjektdimension $\vec{d}_{po}$ zu der generischen Mehrversion-Leistungs-objektdimension $\vec{d}_{po-milti-version}$ steht, $r_3()$ für eine Funktion zum Realisieren der Konvertierung von der spezifi-schen Leistungsobjektdimension $\vec{d}_{po}$ zu der generischen Mehranbieter-Leistungsobjektdimension $\vec{d}_{po-multi-vendor}$ steht, $r_4()$ für eine Funktion zum Realisieren der Konvertierung von der spezifischen Leistungsindexdimension $\vec{d}_{pi}$ zu der generischen Mehrversion-Leistungsindexdimension $\vec{d}_{pi-muti-version}$ steht, und $r_5()$ für eine Funktion zum Realisieren der Konvertierung von der spezifischen Leistungsindexdimension $\vec{d}_{pi}$ zu der generischen Mehr-anbieter-Leistungsindexdimension $\vec{d}_{po-multi-vendor}$ steht, $\vec{i} = (0, ..., 1, 0, ..., 0)^T$ ein Einheitsvektor ist, und $\vec{0} = [0, 0, ... 0, ... 0]^T$ ein Nullvektor ist.

6. Verwaltungsverfahren nach Anspruch 5, wobei das Konvertieren der Instanz der Leistungsdatendimension in dem Systemmodell in ein generisches Mehrversion-Leistungsobjekt gemäß einer Leistungsobjekt-Konvertierungsregel und das Ausgeben einer Datenansicht die folgenden Schritte umfasst:

Schritt 1: Bestimmen einer Menge *poGroup* von Leistungsobjekten mit demselben privaten Netzwerk, demselben Anbieter, unterschiedlichen Versionen, demselben Namen und derselben Korngröße, wenn ein Leistungs-objekt $po_i$ neu zum Systemmodell addiert wird, wobei die Leistungsobjektmenge, die bereits im Systemmodell installiert ist $P = \{po_1, po_j, ......po_m, ..... Po_l\}$ ist und die *poGroup* durch Mengenelemente $po_j$ bestimmt wird:

$$poGroup = \{po_j \mid f^{-1}(po_j) \neq r_2(f^{-1}(po_i)) \wedge r_2(f^{-1}(po_j)) = r_2(f^{-1}(po_i)), po_j \in P\}$$ ;

Schritt 2: Bestimmen einer Menge $PI_j$ der Leistungsindizes, die zu der Leistungsobjektmenge *poGroup* gehören, wobei $PI_j$ durch das Mengenelement $pi_l$ bestimmt wird:

$$PI_j = \{pi_l \mid pi_l \in po_j, po_j \in poGroup\}$$ ,

wobei $j \in [1, poGroup.size]$ und *poGroup.size* für die Größe von *poGroup* stehen;

Schritt 3: Bestimmen einer Menge $\vec{d}_{pi-multi-version}Group$ von Leistungsindexdimensionen, die zu $PI_j$ gehören und mehrere Versionen aufweisen:

$$\vec{d}_{pi-multi-version}Group = \bigcap_{j=1}^{poGroup.size} \{r_4(f^{-1}(pi_j)), pi_j \in PI_j\}$$

Schritt 4: Bestimmen einer Menge $PI'_j$ aus Leistungsindizes, die zu $\vec{d}_{pi-multi-version}Group$ gehören und denselben Namen haben, wobei $PI'_j$ durch das Mengenelement $pi_m$ bestimmt wird und mit Ausnahme der Versionsinformation andere Dimensionsinformationen für die Mengenelemente, die zu $PI'_j$ gehören, dieselben wie die definierte Dimension von P sind:

$$PI_j^{'} = \{pi_m \mid r_4(f^{-1}(pi_m)) \in \vec{d}_{pi-multi-version}Group, pi_m \in PI_j\}$$

Schritt 5: Erzeugen eines generischen Mehrversionen-Leistungsobjekts und -index:

bei $\vec{d}_{po-multi-version}=r_2(f^{-1}(po_i))$ wird ein generisches Mehrversion-Leistungsobjekt erzeugt, indem $po_i$ als Vorlage genommen wird;

bei $\{\vec{d}_{pi-multi-version}\mid \vec{d}_{pi-multi-version} \in \vec{d}_{pi-multi-version}Group\}$ wird ein generischer Mehrversion-Leistungsindex erzeugt, indem $\{pi_x\mid r_4(f^{-1}(pi_x))=\vec{d}_{pi-multi-version} \in \vec{d}_{pi-multi-version}Group\}$ als Vorlage genommen wird;

Schritt 6: Ausgeben einer Datenansicht:
eine Datenansicht v wird basierend auf $\{tableName(po_j), \{columnName(pi_x) \mid pi_x \in PI_j^{'}\} \mid j \in [1, poGroup.size]\}$ ausgegeben und v wird als ein Datenblatt von $po\text{-}_{multi-version}$ genommen, wobei $tableName(po_j)$ der Name des Datenblattes ist, in dem das Leistungsobjekt $po_j$ existiert, und $columnName(pi_x)$ der Spaltenname von $pi_x$ ist.

7. Verwaltungsverfahren nach Anspruch 5, wobei das Konvertieren der Instanz der Leistungsdatendimension in einem Systemmodell ein generisches Mehranbieter-Leistungsobjekt gemäß einer Leistungsobjekt-Konvertierungsregel und das Ausgeben einer Datenansicht die folgenden Schritte umfasst:

Schritt 1: Bestimmen einer Menge *poGroup* von Leistungsobjekten mit demselben privaten Netzwerk, unterschiedlichen Anbietern, unterschiedlichen Versionen, demselben Namen und derselben Korngröße, wenn ein Leistungsobjekt $po_i$ zum Systemmodell neu addiert wird, wobei die Leistungsobjektmenge, die bereits im Systemmodell installiert ist P = $\{po_1, po_j,......, po_m,....... po_l\}$ ist und die *poGroup* durch Mengenelemente $po_j$ bestimmt wird:

$$poGroup = \{po_j \mid f^{-1}(po_j) \neq r_3(f^{-1}(po_i)) \wedge r_3(f^{-1}(po_j)) = r_3(f^{-1}(po_i)), po_j \in P\};$$

Schritt 2: Bestimmen einer Menge $PI_j$ aus Leistungsindizes, die zu der Leistungsobjektmenge *poGroup* gehören, wobei $PI_j$ durch das Mengenelement $pi_l$ bestimmt wird:

$$PI_j = \{pi_l \mid pi_l \in po_j, po_j \in poGroup\}, \text{ wobei } j \in [1, poGroup.size]$$

und *poGroup.size* für die Größe von *poGroup* stehen;
Schritt 3: Bestimmen einer Menge $\vec{d}_{pi-multi-vendor}$ von Leistungsindexdimensionen, die zu $PI_j$ gehören und von mehreren Anbietern sind:

$$\vec{d}_{pi-multi-vendor}Group = \bigcap_{j=1}^{poGroup.size} \{r_5(f^{-1}(pi_j)), pi_j \in PI_j\};$$

Schritt 4: Bestimmen einer Menge $PI_j^{'}$ aus Leistungsindizes, die zu $\vec{d}_{pi-multi-vendor}Group$ gehören und denselben Namen haben, wobei $PI_j^{'}$ durch das Mengenelement $pi_m$ bestimmt wird und mit Ausnahme der Anbieter- und Versionsinformation andere Dimensionsinformationen für die Mengenelemente, die zu $PI_j^{'}$ gehören, dieselben wie die definierte Dimension von P sind:

$$PI_j^{'} = \{pi_m \mid r_5(f^{-1}(pi_m)) \in \vec{d}_{pi-multi-vendor}Group, pi_m \in PI_j\}$$

Schritt 5: Erzeugen eines generischen Mehranbieter-Leistungsobjekts und -index:

bei $\vec{d}_{po-multi-vendor} = r_3 f^{-1}(po_m))$ wird ein generisches Mehranbieter-Leistungsobjekt $po_{multi-vendor}$ erzeugt, indem $po_i$ als eine Vorlage genommen wird;

bei $\{\vec{d}_{pi-multi-vendor} \mid \vec{d}_{pi-multi-vendor} \in \vec{d}_{pi-multi-vendor}Group\}$ wird ein generischer Mehranbieter-Leistungsindex

erzeugt, indem

$$\{pi_x \mid r_5(f^{-1}(pi_x)) = \vec{d}_{pi-multi-vendor} \in \vec{d}_{pi-multi-vendor}Group\}$$

als eine Vorlage genommen wird;

Schritt 6: Ausgeben einer Datenansicht:
eine Datenansicht v wird basierend auf {*tableName(po_j)*, {*columnName(pi_x)* | *pi_x* ∈ *PI'_j*}| *j* ∈ [1,*poGroup.size*]] ausgegeben und v wird als ein Datenblatt von *po_{multi-vendor}* genommen, wobei *tableName (po_j)* der Name des Datenblattes ist, in dem das Leistungsobjekt po_j existiert, und *columnName (pi_x)* der Spaltenname von *pi_x* ist.

8. Vorrichtung zur Verwaltung von Leistungsdaten, umfassend: ein Leistungsdaten-Dienstpaket-Erzeugungsmodul (41), ein Modul zur vorläufigen Verarbeitung von Leistungsdaten (42) und ein generisches Leistungsobjekt-Erzeugungsmodul (43); wobei:

das Leistungsdaten-Dienstpaket-Erzeugungsmodul (41) zum Einrichten einer Leistungsdatendimension konfiguriert ist, das eine Ressourcentypdimension, eine Leistungsobjektdimension und eine Leistungsindexdimension umfasst, und Erfassen der Leistungsdateninformationen, die zum Bestimmen eines Ressourcentyps, eines Leistungsobjekts und eines Leistungsindex konfiguriert sind; und Einrichten und Installieren eines Leistungsdatendienstpakets basierend auf den Leistungsdateninformationen;
das Modul zum vorläufigen Verarbeiten der Leistungsdaten (42) zum Installieren des erzeugten Leistungsdaten-Dienstpakets in einem Systemmodell, zum Parsen des Dienstpakets zum Erhalten einer Instanz der Leistungsdatendimension und zum Addieren der erhaltenen Instanz der Leistungsdatendimension in das Systemmodell konfiguriert ist; und
das generische Leistungsobjekt-Erzeugungsmodul (43) konfiguriert ist zum Konvertieren der Instanz der Leistungsdatendimension in dem Systemmodell in ein generisches Mehrversion-Leistungsobjekt und ein generisches Mehranbieter-Leistungsobjekt gemäß einer Leistungsobjekt-Konvertierungsregel, und Ausgeben einer Datenansicht;
wobei die Ressourcentypdimension umfasst: eine spezifische Ressourcentypdimension $\vec{d}_{res-type}$ und eine generische Ressourcentypdimension $\vec{d}_{c-res-type}$; wobei
das Leistungsdaten-Dienstpaket-Erzeugungsmodul (41) konfiguriert ist zum:

Einrichten einer spezifischen Ressourcentypdimension durch Einrichten von $\vec{d}_{res-type}$ = (Privates Netzwerk, Anbieter, Ressourcentypname)$^T$; und
Einrichten einer generischen Ressourcentypdimension durch Einrichten von *dc-res-type* = (Privates Netzwerk, 0, Ressourcentypname)$^T$;
wobei das Leistungsdaten-Dienstpaket-Erzeugungsmodul (41) konfiguriert ist zum:

Einrichten einer spezifischen Leistungsobjektdimension durch $\vec{d}_{po}$ = (Privates Netzwerk, Anbieter, Ressourcentyp, Version, Leistungsobjektname, Korngröße)$^T$;
Einrichten einer generischen Mehrversion-Leistungsdimensionsdimension durch $\vec{d}_{po-multi-version}$ = (Privates Netzwerk, Anbieter, Ressourcentyp, 0, Leistungsobjektname, Korngröße)$^T$; und
Einrichten einer generischen Mehranbieter-Leistungsobjektdimension durch $\vec{d}_{po-multi-vendor}$ = (Privates Netzwerk, 0, Ressourcentyp, 0, Leistungsobjektname, Korngröße)$^T$;

das Leistungsdaten-Dienstpaket-Erzeugungsmodul (41) konfiguriert ist zum:

Einrichten einer spezifischen Leistungsobjektdimension durch $\vec{d}_{pi}$ = (Privates Netzwerk, Anbieter, Ressourcentyp, Version, Leistungsobjektname, Korngröße, Leistungsindexname)$^T$;
Einrichten einer Mehrversion-Leistungsindexdimension durch $\vec{d}_{pi-multi-version}$ (Privates Netzwerk, Anbieter, Ressourcentyp, 0, Leistungsobjektname, Korngröße, Leistungsindexname)$^T$; und
Einrichten einer Mehranbieter-Leistungsindexdimension durch $\vec{d}_{pi-multi-vendor}$ = (Privates Netzwerk, 0, Ressourcentyp, 0, Leistungsobjektname, Korngröße, Leistungsindexname)$^T$.

**Revendications**

1. Méthode de gestion de données de performance, **caractérisée en ce qu'**elle comprend :

l'établissement (101), par un système de gestion de réseau de niveau supérieur, d'une dimension de données de performance comprenant une dimension de type de ressource, une dimension d'objet de performance et une dimension d'indice de performance, l'acquisition des informations de données de performance configurées pour déterminer un type de ressource, un objet de performance et un indice de performance, et l'établissement et l'installation d'un paquet de service de données de performance sur la base des informations de données de performance ;
la réalisation d'une analyse syntaxique (102) du paquet de service de données de performance pour obtenir une instance de la dimension de données de performance, et l'ajout de l'exemple de la dimension de données de performance dans un modèle de système ; et
la conversion (103) de l'instance de la dimension de données de performance dans le modèle de système en un objet de performance générique multiversion et un objet de performance générique multiconstructeur conformément à une règle de conversion en objet de performance, et la fourniture en sortie d'un affichage de données ;
dans laquelle l'établissement d'une dimension de type de ressource comprend :

la dimension de type de ressource comprend : une dimension de type de ressource spécifique $\vec{d}_{res\text{-}type}$ et une dimension de type de ressource générique $\vec{d}_{c\text{-}res\text{-}type}$ ; dans laquelle
la dimension de type de ressource spécifique est établie en établissant $\vec{d}_{res\text{-}type}$ = (Réseau privé, Constructeur, Nom de type de ressource)$^T$ ; et
la dimension de type de ressource générique est établie par $\vec{d}_{c\text{-}res\text{-}type}$ = (Réseau privé, 0, Nom de type de ressource)$^T$ ;
l'établissement d'une dimension d'objet de performance comprend :

l'établissement d'une dimension d'objet de performance spécifique par $\vec{d}_{po}$ = (Réseau privé, Constructeur, Type de ressource, Version, Nom d'objet de performance, Taille de grain)$^T$ ;
l'établissement d'une dimension d'objet de performance générique multiversion par $\vec{d}_{po\text{-}multi\text{-}version}$ = (Réseau privé, Constructeur, Type de ressource, 0, Nom d'objet de performance, Taille de grain)$^T$ ; et
l'établissement d'une dimension d'objet de performance générique multiconstructeur par $\vec{d}_{po\text{-}multi\text{-}vendor}$ = (Réseau privé, 0, Type de ressource, 0, Nom d'objet de performance, Taille de grain)$^T$ ; et

l'établissement d'une dimension d'indice de performance comprend :

l'établissement d'une dimension d'indice de performance spécifique par $\vec{d}_{pi}$ = (Réseau privé, Constructeur, Type de ressource, Version, Nom d'objet de performance, Taille de grain, Nom d'indice de performance)$^T$ ;
l'établissement d'une dimension d'indice de performance multiversion par $\vec{d}_{pi\text{-}multi\text{-}version}$ = (Réseau privé, Constructeur, Type de ressource, 0, Nom d'objet de performance, Taille de grain, Nom d'indice de performance)$^T$ ; et
l'établissement d'une dimension d'indice de performance multiconstructeur par $\vec{d}_{pi\text{-}multi\text{-}vendor}$ = (Réseau privé, 0, Type de ressource, 0, Nom d'objet de performance, Taille de grain, Nom d'indice de performance)$^T$.

2. Méthode de gestion selon la revendication 1, dans laquelle, l'acquisition des informations de données de performance configurées pour déterminer un type de ressource, un objet de performance et un indice de performance comprend :
l'acquisition, par un système de gestion de réseau de niveau supérieur via une interface ascendante, d'informations spécifiques de données de performance gérées par un système de gestion de réseau de niveau inférieur, dans laquelle les informations spécifiques de données de performance comprennent : réseau privé, constructeur, type de ressource, version et taille de grain.

3. Méthode de gestion selon la revendication 1, dans laquelle, l'établissement et l'installation d'un paquet de service de données de performance sur la base des informations de données de performance comprennent : l'établissement d'un exemple de la dimension de données de performance conformément aux informations de données de performance, et la compression de l'exemple de la dimension de données de performance établi en un paquet de service de données de performance ; dans laquelle, l'établissement d'un exemple de la dimension de données de performance comprend les étapes consistant à :

étape 1 : établir un exemple de type de ressource générique conformément à $\vec{d}_{c\text{-}res\text{-}type}$, dans laquelle, l'exemple de type de ressource générique est stocké dans une feuille de données de type de ressource générique, et le type de ressource générique géré par le système de gestion de réseau de niveau inférieur connecté au système de gestion de réseau de niveau supérieur est enregistré dans la feuille de données de type de ressource générique ;

étape 2 : établir un exemple de type de ressource spécifique conformément à $\vec{d}_{res\text{-}type}$, dans laquelle, l'exemple de type de ressource spécifique est stocké dans une feuille de données de type de ressource spécifique, et le type de ressource spécifique géré par le système de gestion de réseau de niveau inférieur connecté au système de gestion de réseau de niveau supérieur est enregistré dans la feuille de données de type de ressource spécifique, chaque feuille de données de type de ressource spécifique est mise en correspondance avec une feuille de données de type de ressource générique correspondante, et la feuille de données de type de ressource générique correspondante est une feuille de données de type de ressource générique où est stocké l'instance de type de ressource générique auquel appartient l'instance de type de ressource spécifique ;

étape 3 : établir une instance d'objet de performance conformément à $\vec{d}_{po}$, dans laquelle, l'instance d'objet de performance est stocké dans une feuille de données d'objet de performance, l'objet de performance géré par le système de gestion de réseau de niveau inférieur connecté au système de gestion de réseau de niveau supérieur est enregistré dans la feuille de données d'objet de performance, chaque feuille de données d'objet de performance est mise en correspondance avec une feuille de données de type de ressource spécifique correspondante, et la feuille de données de type de ressource spécifique correspondante est une feuille de données de type de ressource spécifique où est stocké l'exemple de type de ressource spécifique auquel appartient l'instance d'objet de performance.

4. Méthode de gestion selon la revendication 3, dans laquelle, l'établissement d'une instance d'objet de performance conformément à $\vec{d}_{po}$ comprend :

la définition des noms d'objets de performance ou d'indices de performance ayant la même signification de service comme étant les mêmes noms d'objets de performance ou d'indices de performance ; et
le changement de nom des objets de performance et des indices de performance ayant le même nom mais des significations de service différentes.

5. Méthode de gestion selon la revendication 4, dans laquelle, la règle de conversion en objet de performance comprend :

la définition de $r_1$ ($\vec{d}_{res\text{-}type}$) en tant que :

$$\vec{d}_{c\text{-}res\text{-}type} = [\vec{1}, o, \vec{1}] \times \vec{d}_{res\text{-}type} ;$$

la définition de $r_2$ ($\vec{d}_{po}$) en tant que :

$$\vec{d}_{po\text{-}multi\text{-}version} = [\vec{1}, \vec{1}, \vec{1}, o, \vec{1}, \vec{1}] \times \vec{d}_{po} ;$$

la définition de $r_3$ ($\vec{d}_{po}$) en tant que :

$$\vec{d}_{po\text{-}multi\text{-}vendor} = [\vec{1}, \vec{o}, \vec{1}, \vec{o}, \vec{1}, \vec{1}] \times \vec{d}_{po} ;$$

la définition de $r_4$ ($\vec{d}_{pi}$) en tant que :

$$\vec{d}_{pi-multi-version} = [\vec{\iota},\ \vec{\iota},\ \vec{\iota},\ \vec{o},\ \vec{\iota},\ \vec{\iota},\ \vec{\iota}]\ x\ \vec{d}_{pi}\ ;$$

la définition de $r_5\,(\vec{d}_{pi})$ en tant que :

$$\vec{d}_{pi-multi-vendor} = [\vec{\iota},\ \vec{o},\ \vec{\iota},\ \vec{o},\ \vec{\iota},\ \vec{\iota},\ \vec{\iota}]\ x\ \vec{d}_{pi}\ ;$$

dans laquelle, $r_1\,()$ représente une fonction permettant de réaliser la conversion de la dimension de type de ressource spécifique $\vec{d}_{res-type}$ vers la dimension de type de ressource générique $\vec{d}_{c-res-type}$, $r_2\,()$ représente une fonction permettant de réaliser la conversion de la dimension d'objet de performance spécifique $\vec{d}_{po}$ vers la dimension d'objet de performance générique multiversion $\vec{d}_{po-multi-version}$ $r_3\,()$ représente une fonction permettant de réaliser la conversion de la dimension d'objet de performance spécifique $\vec{d}_{po}$ vers la dimension d'objet de performance générique multiconstructeur $\vec{d}_{po-multi-vendor}$, $r_4()$ représente une fonction permettant de réaliser la conversion de la dimension d'indice de performance spécifique $\vec{d}_{pi}$ vers la dimension d'indice de performance générique multiversion $\vec{d}_{pi-multi-version}$, et $r_5\,()$ représente une fonction permettant de réaliser la conversion de la dimension d'indice de performance spécifique $\vec{d}_{pi}$ vers la dimension d'indice de performance générique multiconstructeur $\vec{d}_{po-multi-vendor}$, $\vec{d} = (0,\ ...,\ 1,\ 0,\ ...,\ 0)^T$ est un vecteur unitaire, et $\vec{0} = [0,\ 0,\ ...\ 0,\ ...\ 0]^T$ est un vecteur nul.

6. Méthode de gestion selon la revendication 5, dans laquelle, la conversion de l'instance de la dimension de données de performance dans le modèle de système en un objet de performance générique multiversion conformément à une règle de conversion en objet de performance et la fourniture en sortie d'un affichage de données comprend les étapes consistant à :

étape 1 : déterminer un ensemble *poGroup* d'objets de performance ayant le même réseau privé, le même constructeur, différentes versions, le même nom et la même taille de grain lorsqu'un objet de performance *po$_i$* est nouvellement ajouté au modèle de système, dans laquelle l'ensemble d'objets de performance déjà installé dans le modèle de système est $P = \{po_1,\ po_j\ ...\ po_m,\ ...\ po_1\}$, et le *poGroup* est déterminé par les éléments d'ensemble *po$_j$* :

$$poGroup = \{po_j \mid f^{-1}(po_j) \neq r_2(f^{-1}(po_i)) \wedge r_2(f^{-1}(po_j)) = r_2(f^{-1}(po_i)), po_j \in P\}\ ;$$

étape 2 : déterminer un ensemble *PI$_j$* d'indices de performance qui appartiennent à l'ensemble d'objets de performance *poGroup*, dans laquelle, *PI$_j$* est déterminé par l'élément d'ensemble *pi$_1$* :
$PI_j = \{pi_1 \mid pi_1 \in po_j,\ po_j \in poGroup\}$, dans laquelle, $j \in [1,\ poGroup.size]$, et *poGroup.size* représente la taille de *poGroup* ;
étape 3 : déterminer un ensemble $\vec{d}_{pi-multi-version}$ *Group* de dimensions d'indice de performance qui appartiennent à *PI$_j$* et sont multiversion :

$$\vec{d}_{pi-multi-version}\,Group = \bigcap_{j=1}^{poGroup.size}\{r_4(f^{-1}(pi_j)),\ pi_j \in PI_j\}$$

étape 4 : déterminer un ensemble *PI'$_j$* d'indices de performance qui appartiennent à $\vec{d}_{pi-multi-version}$ *Group* et ont le même nom, dans laquelle, *PI'$_j$* est déterminé par l'élément d'ensemble *pi$_m$*, et excepté pour les informations de version, les autres informations de dimension pour les éléments d'ensemble qui appartiennent à *PI'$_j$* sont les mêmes que la dimension définie de P :

$$PI'_j = \{pi_m \mid r_4(f^{-1}(pi_m)) \in \vec{d}_{pi-multi-version}\,Group,\ pi_m \in PI_j\}$$

étape 5 : créer un objet et un indice de performance générique multiversion :

au niveau de $\vec{d}_{po\text{-}multiversion} = r_2\ (f^{-1}(po_i))$, un objet de performance générique multiversion $po_{multi\text{-}version}$ est créé en prenant $po_i$ en tant que modèle ;

au niveau de $\{\vec{d}_{pi\text{-}multi\text{-}version} \mid \vec{d}_{pi\text{-}multi\text{-}version} \in \vec{d}_{pi\text{-}multi\text{-}version}\ Group\}$, un indice de performance générique multiversion est créé en prenant $\{pi_x \mid r_4\ (f^{-1}(pi_x)) = \vec{d}_{pi\text{-}multi\text{-}version} \in \vec{d}_{pi\text{-}multi\text{-}version}\ Group\}$ en tant que modèle ;

étape 6 : fournir en sortie un affichage de données :
un affichage de données v est fourni en sortie sur la base de $\{tableName\ (po_j)$ , $\{columnName\ (pi_x) \mid pi_x \in PI'_j\}$ $\mid j \in [1, poGroup.size]\}$, et v est pris en tant que feuille de données de $po_{multi\text{-}version}$, dans laquelle $tableName\ (po_j)$ est le nom de la feuille de données où l'objet de performance $po_j$ existe, et $columnName\ (pi_x)$ est le nom de colonne de $pi_x$.

7. Méthode de gestion selon la revendication 5, dans laquelle, la conversion de l'exemple de la dimension de données de performance dans le modèle de système en un objet de performance générique multiconstructeur conformément à une règle de conversion en objet de performance et la fourniture en sortie d'un affichage de données comprend les étapes consistant à :

étape 1 : déterminer un ensemble $poGroup$ d'objets de performance ayant le même réseau privé, différents constructeurs, différentes versions, le même nom et la même taille de grain lorsqu'un objet de performance $po_i$ est nouvellement ajouté au modèle de système, dans laquelle l'ensemble d'objets de performance déjà installé dans le modèle de système est $P = \{po_1, po_j, \dots po_m, \dots po_l\}$, et le $poGroup$ est déterminé par l'élément d'ensemble $po_j$ :

$$poGroup = \{po_j \mid f^{-1}(po_j) \neq r_3(f^{-1}(po_i)) \wedge r_3(f^{-1}(po_j)) = r_3(f^{-1}(po_i)), po_j \in P\}\ ;$$

étape 2 : déterminer un ensemble $PI_j$ d'indices de performance qui appartiennent à l'ensemble d'objets de performance $poGroup$, dans laquelle, $PI_j$ est déterminé par l'élément d'ensemble $pi_1$ :
$PI_j = \{pi_l \mid pi_l \in po_j, po_j \in poGroup\}$, dans laquelle, $j \in [1, poGroup.size]$, et $poGroup.size$ représente la taille de $poGroup$ ;
étape 3 : déterminer un ensemble $\vec{d}_{pi\text{-}multi\text{-}vendor}\ Group$ de dimensions d'indice de performance qui appartiennent à $PI_j$ et sont multiconstructeur :

$$\vec{d}_{pi\text{-}multi\text{-}vendor}\ Group = \bigcap_{j=1}^{poGroup.size} \{r_5(f^{-1}(pi_j)), pi_j \in PI_j\}\ ;$$

étape 4 : déterminer un ensemble $PI'_j$ d'indices de performance qui appartiennent à $\vec{d}_{pi\text{-}multi\text{-}vendor}\ Group$ et ont le même nom, dans laquelle, $PI'_j$ est déterminé par l'élément d'ensemble $pi_m$, et excepté pour les informations de constructeur et de version, les autres informations de dimension pour les éléments d'ensemble qui appartiennent à $PI'_j$ sont les mêmes que la dimension définie de P :

$$PI'_j = \{pi_m \mid r_5(f^{-1}(pi_m)) \in \vec{d}_{pi\text{-}multi\text{-}vendor}\ Group, pi_m \in PI_j\}$$

étape 5 : créer un objet et un indice de performance générique multiconstructeur :

au niveau de $\vec{d}_{po\text{-}multi\text{-}vendor} = r_3\ (f^{-1}(po_m))$, un objet de performance générique multiconstructeur $po_{multi\text{-}vendor}$ est créé en prenant $po_i$ en tant que modèle ;
au niveau de $\{\vec{d}_{pi\text{-}multi\text{-}vendor} \mid \vec{d}_{pi\text{-}multi\text{-}vendor} \in \vec{d}_{pi\text{-}multi\text{-}vendor}\ Group\}$, un indice de performance multiconstructeur est créé en prenant $\{pi_x \mid r_5\ (f^{-1}(pi_x)) = \vec{d}_{pi\text{-}multi\text{-}vendor} \in \vec{d}_{pi\text{-}multi\text{-}vendor}\ Group\}$ en tant que modèle ;

étape 6 : fournir en sortie un affichage de données :
un affichage de données v est fourni en sortie sur la base de $\{tableName(po_j)$, $\{columnName\ (pi_x) \mid pi_x \in PI'_j\}$ $\mid j \in [1, poGroup.size]\}$, et v est pris en tant que feuille de données de $po_{multi\text{-}vendor}$ dans laquelle $tableName$

*(po$_j$)* est le nom de la feuille de données où l'objet de performance *po$_j$* existe, et *columnName (pi$_x$)* est le nom de colonne de *pi$_x$*.

8. Dispositif de gestion de données de performance comprenant : un module de génération de paquet de service de données de performance (41), un module de traitement préliminaire de données de performance (42) et un module de génération d'objet de performance générique (43) ; dans lequel :

le module de génération de paquet de service de données de performance (41) est configuré pour établir une dimension de données de performance, qui comprend une dimension de type de ressource, une dimension d'objet de performance et une dimension d'indice de performance, et acquérir les informations de données de performance configurées pour déterminer un type de ressource, un objet de performance et un indice de performance ; et établir et installer un paquet de service de données de performance sur la base des informations de données de performance ;

le module de traitement préliminaire de données de performance (42) est configuré pour installer le paquet de service de données de performance généré dans un modèle de système, réaliser une analyse syntaxique du paquet de service pour obtenir une instance de la dimension de données de performance, et ajouter l'instance de la dimension de données de performance obtenu dans le modèle de système ; et

le module de génération d'objet de performance générique (43) est configuré pour convertir l'instance de la dimension de données de performance dans le modèle de système en un objet de performance générique multiversion et un objet de performance générique multiconstructeur conformément à une règle de conversion en objet de performance, et la fourniture en sortie d'un affichage de données ;

dans lequel la dimension de type de ressource comprend : une dimension de type de ressource spécifique $\vec{d}_{res\text{-}type}$ et une dimension de type de ressource générique $\vec{d}_{c\text{-}res\text{-}type}$ ; dans lequel,

le module de génération de paquet de service de données de performance (41) est configuré pour :

établir une dimension de type de ressource spécifique en établissant $\vec{d}_{res\text{-}type}$ = (Réseau privé, Constructeur, Nom de type de ressource)$^T$ ; et

établir une dimension de type de ressource générique par $d_{c\text{-}res\text{-}type}$ = (Réseau privé, 0, Nom de type de ressource)$^T$ ;

dans lequel le module de génération de paquet de service de données de performance (41) est configuré pour :

établir une dimension d'objet de performance spécifique par $\vec{d}_{po}$ = (Réseau privé, Constructeur, Type de ressource, Version, Nom d'objet de performance, Taille de grain)$^T$ ;

établir une dimension d'objet de performance générique multiversion par $\vec{d}_{po\text{-}multi\text{-}version}$ = (Réseau privé, Constructeur, Type de ressource, 0, Nom d'objet de performance, Taille de grain)$^T$ ; et

établir une dimension d'objet de performance générique multiconstructeur par $\vec{d}_{po\text{-}multi\text{-}vendor}$ = (Réseau privé, 0, Type de ressource, 0, Nom d'objet de performance, Taille de grain)$^T$ ;

le module de génération de paquet de service de données de performance (41) est configuré pour :

établir une dimension d'indice de performance spécifique par $\vec{d}_{pi}$ = (Réseau privé, Constructeur, Type de ressource, Version, Nom d'objet de performance, Taille de grain, Nom d'indice de performance)$^T$ ;

établir une dimension d'indice de performance multiversion par $\vec{d}_{pi\text{-}multi\text{-}version}$ = (Réseau privé, Constructeur, Type de ressource, 0, Nom d'objet de performance, Taille de grain, Nom d'indice de performance)$^T$ ; et

établir une dimension d'indice de performance multiconstructeur par $\vec{d}_{pi\text{-}multi\text{-}vendor}$ = (Réseau privé, 0, Type de ressource, 0, Nom d'objet de performance, Taille de grain, Nom d'indice de performance)$^T$.

101. Establishing, by an upper-level network management system, a performance data dimension, and establishing and installing a performance data service packet according to the performance data dimension

102. Parsing the performance data service packet to obtain an instance of the performance data dimension, and adding the instance of the performance dimension into the system model

103. Generating a multiple-version generic performance object and a multiple-vendor generic performance object according to a performance object conversion rule, and outputting a data view

## FIG. 1

FIG. 2

EP 3 073 675 B1

$$(\text{CDMA},0,{}^{\text{CELL}},0,{}_{\text{Measurement}}^{\text{Call\_}},30)^{\text{T}}$$

$$(\text{CDMA},\text{ZTE},{}^{\text{CELL}},0,{}_{\text{Measurement}}^{\text{Call\_}},30)^{\text{T}}$$

$$(\text{CDMA},\text{ZTE},{}^{\text{CELL}},1.0,{}_{\text{Measurement}}^{\text{Call\_}},30)^{\text{T}}$$

Layer of Private Network

Layer of Private Network and Vendor

Layer of Private Network, Vendor and Version

**FIG. 3**

Performance Data Service
Packet Generating
Module 41

↓

Performance Data
Preliminary Processing
Module 42

↓

Generic performance
Object Generating
Module 43

FIG. 4

**EP 3 073 675 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7606895 B1
- US 5696697 A1